# EUROPEAN PATENT SPECIFICATION

(11) **EP 3 408 094 B1**
(45) Date of publication and mention of the grant of the patent: **20.10.2021**
(21) Application number: 15900774.9
(22) Date of filing: 13.08.2015
(51) Int. Cl.: B32B 27/32, B32B 27/08, B32B 27/00, B65D 30/00

(54) **DIRECT CONTACT HEAT SEALED POLYETHYLENE LAMINATES**
DIREKTKONTAKTHEISSGESIEGELTE POLYETHYLENLAMINATE
STRATIFIÉS DE POLYÉTHYLÈNE THERMOSCELLÉS À CONTACT DIRECT

(43) Date of publication of application: 05.12.2018
(73) Proprietor: The Procter & Gamble Company, Cincinnati, OH 45202 (US)
(72) Inventor: RONG, Jiashao, Beijing 101312 (CN); PANDEY, Pradeep Kumar, Beijing 101312 (CN)
(74) Representative: P&G Patent Belgium UK
(86) International application number: PCT/CN2015/086830
(87) International publication number: WO 2017/024576

(56) References cited:
- EP-A1- 1 736 309
- EP-A1- 2 875 948
- CN-A- 101 863 336
- CN-A- 103 434 237
- US-A1- 2014 134 370

## Description

### FIELD OF THE INVENTION

The present invention relates to polyethylene laminates, films for making such laminates, direct contact heat sealing methods to make containers from such laminates, and containers made from such laminates.

### BACKGROUND OF THE INVENTION

Flexible thermoplastic films and laminates are used in a variety of applications including the construction of containers such as bags by direct contact heat sealing the films or laminates to form a direct contact heat sealed film/laminate. In turn, these bags (e.g., pillow bags, gusset bags, and the like) may hold products such as dry laundry detergent (at weights that may range from 0.25 kilogram (kg) to 5 kg) and that can withstand typical manufacturing, distribution, and usage stresses. One application is a so called form-fill-and-seal packaging. Typical thermoplastic polymers types include PE, PP, and PET. PE is "polyethylene" (or polyethene) which is the most produced polymer in the world. In term, PE can be found in different grades including HDPE ("high-density polyethylene"), LLDPE ("linear low-density polyethylene"), and LDPE ("low-density polyethylene"). PP is "polypropylene." PET is "polyethylene terephthalate."

One approach used in of form-fill-and-seal packaging is VFFS (vertical form fill seal). The standard machine will use direct contact heat sealing in forming the bags. These machines are relatively inexpensive and have low energy consumption comparative to many other types of machine. Accordingly, many of these machines are used in developing markets. To operate effectively, the films or laminates used in the process need to have enough rigidity so the web handling equipment can handle the film or laminate, particularly in high speed manufacturing operations. However, if the films or laminates are too stiff, then often unsightly wrinkles are formed in the bags.

Another requirement for the films and laminates is that there must be a large enough of temperature differential between the sealing layer of the film or laminate to be sealed, and the outer layer making contact with the direct contact heat sealing apparatus. A limitation with direct contact heat sealing is the outer surface of the film or laminate can stick to the heated die or bar (of the direct contact heating apparatus) during the direct contact heat sealing process, particularly during high speed operating conditions, leading to unacceptable results such as direct contact heat seal quality (or even visible wrinkles). A classic approach to address this problem is the use of a film or laminate having multiple layers each made from different thermoplastic polymer types, specifically wherein the sealing layer has a lower melting point than the outer layer making contact with the direct contact heat sealing apparatus. This way, the sealing layers will melt forming a direct contact heat seal from the direct contact heat sealing process and the outer layer, with a higher melting point, will not stick to the direct contact heat sealing apparatus. In other words, the die or bar only heats the film to at least the melting temperature of the sealing layer but not above melting temperature of the outer layer contacting the die or bar. Therefore the first sealing layer (of the first laminate) makes a direct contact heat seal with the corresponding second sealing layer (of a second laminate), while the respective outer layers will neither melt nor stick to the die/bar. Typically films or laminates used in the process contain a layer of PET and a layer of PE or three layer sheet like PET, a metallic film (like MYLAR®), and PE. See e.g., WO 2012/094791, *esp.* Example 1 at page 11. However, a limitation with this classic approach is that resulting laminate is made from different thermoplastic polymer types or even metal thereby posing recycling challenges.

Thermoplastic polymer types are generally recyclable. However, a limitation in the recyclability of these polymers is posed when multiple thermoplastic polymer types are combined together into a single film or laminate and need to be separated after the end product life cycle. Indeed chemically or physically separating the film or laminate into respective thermoplastic polymer component types significantly increases the cost and complexity of recycling. It would be advantageous to provide a flexible thermoplastic film or laminate that is made from single plastic polymer type, such as PE, and that eliminates, or at least minimizes, the use of other thermoplastic polymer types (such as PP and PET) to improve the cost of recycling.

PE films and laminate are reported. Given the relatively low melting point differential between different layers of PE films and laminate, higher energy or more complex equipment is used. For example, impulse sealing is one example of a technique to seal laminates of PE together. Generally impulse sealing using a pulse of intense thermal energy to form the seal is used. A disadvantage of this technique is the expense of the equipment used as well as the energy demands required by the equipment, particularly on large production scale. It would be advantageous to provide a flexible thermoplastic film or laminate that is made predominately PE, and that eliminates, or at least minimizes, the use of other thermoplastic polymer types (such as PP and PET) that has a relatively high melting point differential between the sealing layer and the outer layer that could be used with conventional direct contact heat sealing equipment such as VFFS.

A problem with PE films and laminates that eliminate, or at least minimizes, the use of other thermoplastic polymer types (such as PP and PET) is the rigidity of the film. These films typically do not have rigidity that is optimized for conventional web handling equipment associated with the direct heat contact sealing process (such as VFFS). If the rigidity is not sufficient, the web handling equipment simply cannot handle the film/laminate. If the rigidity is too much, then unsightly wrinkles may result. There is a need for such a PE film or laminate that optimizes rigidity for such an application.

Thickness of the film or laminate may also influence rigidity. However, if the film or laminate is too thin, it will not provide sufficient strength for the container to withstand the stress typically associated with manufacturing, transportation, and the like. This is especially true for relatively larger weight products (e.g., 250 grams to 5 kg). But if there is too much material, this is not cost effective. Therefore there is a need for a film or laminate thickness that optimizes overall strength of the bag, especially for larger sized products, while minimizing the amount of material used to make the bag, and while having a desirable range of rigidity for conventional web handling equipment associated with direct contact heat sealing process.

EP2875948A1 relates to machine direction oriented films with excellent mechanical properties, in particular high tear strength in the machine direction, that comprise a particular multimodal linear low density polyethylene that has been formed into a film and uniaxially stretched in the machine direction (MDO films). In particular, the invention relates to the formation of monolayer or multilayer MDO films using a particular multimodal LLDPE which surprisingly provides high tear strength at certain post stretching film thicknesses.

There is a need for a multi-layer film or laminate that is predominantly comprised of PE to improve recyclability. There is a further need for this film or laminate to form direct contact heat seal of sufficient strength by use of conventional direct healing equipment and conditions (such as VFFS). There is yet a further need for this film or laminate to have sufficient rigidity to be handled by conventional web handling equipment typically associated with conventional direct healing equipment and conditions while optimizing the thickness of the film or laminate.

### SUMMARY OF THE INVENTION

The present invention is based on the surprising discovery of a film and laminate formulation that addresses at least one of these problems. Specifically, the melting point differential between the sealing film and the printing film is more than 20° C, preferably more than 25° C. This melting point differential is important for not only enabling the direct contact heat seal, but also mitigating against the printing film from sticking to the direct contacting heat apparatus during operation. The films and laminate have a very high percentage of PE such that recycling is improved. The films and laminate of the present invention make direct contact heat seals by conventional direct heat sealing techniques (e.g., VFFS), such that the heat seal is of sufficient strength to withstand the typical stresses associated with manufacturing, distribution, and usage.

One aspect of the invention provides for a printing film. The printing film is at least three layers, preferably only three layers, co-extrusion blown printing film having: (i) a surface layer of a first co-extrusion formulation; (ii) a middle layer by weight of a second co-extrusion formulation having: 25 wt% to 75 wt%, preferably 35-65 wt%, more preferably 40-60 wt%, yet more preferably 45- 55 wt%, of a linear low density polyethylene, preferably wherein the linear low density polyethylene is a metallocene linear low density polyethylene; 10 wt% to 50 wt%, preferably 15-45 wt%, more preferably 20-30 wt% of a high density polyethylene; 10 wt% to 40 wt%, preferably 20 -30 wt% of an optional polyethylene polymer component, and wherein the wt% is relative to the second co-extrusion formulation; (iii) a laminating layer by weight of a third co-extrusion formulation having: 10 wt% to 50 wt%, preferably 15-45 wt%, more preferably 20-30 wt% of a linear low density polyethylene, preferably wherein the linear low density polyethylene is a metallocene linear low density polyethylene; 25 wt% to 75 wt%, preferably 35-65 wt%, more preferably 40-60 wt%, yet more preferably 45-55 wt% of a high density polyethylene; 10 wt% to 40 wt%, preferably 20 -30 wt% of an optional polyethylene polymer component, wherein the wt% is relative to the third co-extrusion formulation; and wherein the middle layer of the printing film is in-between the surface layer and the laminating layer of the printing film. Preferably the printing film has an overall thickness of 20 microns to 50 microns, more preferably 20-50 microns, yet more preferably 25-35 microns, yet still more preferably from 25-30 microns (as measured after extrusion blowing but before any lamination).

Another aspect of the invention provides for a sealing film. The sealing film is at least three layers, preferably only three layers, co-extrusion blown sealing film having: (i) a laminating layer by weight of a first co-extrusion formulation having: 50 wt% to 100 wt% preferably from 60-90 wt% of a multi-modal linear lower density polyethylene, preferably a bimodal linear lower density polyethylene, more preferably a bimodal butene linear lower density polyethylene; 0 wt% to 50 wt%, of an optional polyethylene polymer component, preferably the optional polyethylene polymer component is 10-40 wt% of a high density polyethylene; and wherein the wt% is relative to the first co-extrusion formulation; (ii) a middle layer by weight of a second co-extrusion formulation having: 50 wt% to 100 wt%, preferably from 65-95 wt% of a multi-modal linear lower density polyethylene, preferably a bimodal linear lower density polyethylene, more preferably a bimodal butene linear lower density polyethylene; 0 wt% to 50 wt% of an optional polymer component, preferably the optional polymer component is 5-35 wt%, and preferably wherein the optional polymer component is titanium dioxide dissolved in a polymeric carrier; and wherein the wt% is relative to the second co-extrusion formulation; (iii) a sealing layer of a third co-extrusion formulation having: 25 wt% to 60 wt%, preferably from 30 - 60 wt%, more preferably from greater than 35 wt% to 55 wt%, even more preferably 40 - 55 wt% of a plastomer, preferably an olefin plastomer, more preferably the olefin plastomer having a density greater than 0.900 g/cm³ per ASTM D792, even more preferably the olefin plastomer having a density of 0.902g/cm³ base value according to ASTM D792; 25 wt% to 75 wt%, preferably from 35 - 65 wt%, more preferably 40 - 60 wt% of a multi-modal linear lower density polyethylene, preferably a bimodal linear lower density polyethylene, more preferably a bimodal butene linear lower density polyethylene; 0 wt% to 50 wt%, preferably from 0 - 25 wt%, more preferably from 0 - 15 wt% of an optional polyethylene polymer component; and wherein the wt% is relative to the third co-extrusion formulation; and wherein the middle layer of the sealing film is in-between the laminating layer and the sealing layer of the sealing film. Preferably the sealing film has an overall thickness of 20 microns to 150 microns, more preferably 25-120 microns, yet more preferably 22-70 microns (as measured after extrusion blowing but before any lamination).

Another aspect of the invention provides for a laminate comprising the printing film and the sealing film of the present invention (e.g., as previously described), wherein the laminating layer of the printing film is laminated to the laminating layer of the sealing film to form the laminate. Preferably the lamination is water-based dry lamination.

Another aspect of the invention provides for a printing film, sealing film, or a laminate of the present invention (e.g., as previously described) having a high level of polyethylene to facilitate recycling. To this end, the printing film, the sealing film, or the laminate preferably each comprises at least 85 wt% of polyethylene by weight of the respective printing film, sealing film, or laminate, preferably at least 90 wt%, more preferably at least 95 wt%, yet more preferably at least 97 wt%, alternatively from 85 wt% to about 100 wt%.

Another aspect of the invention provides for a method of making a container comprising the step of forming a direct contact heat seal between two laminates of the present invention (e.g., as previously described) by direct contact heat sealing the respective sealing layers of the laminates at a temperature from 95° C to 130°C, preferably from 105° C to 120° C, for a pressure from 1 bar (100 kPa) to 6 bar (600 kPa) pressure, preferably from 2 bar to 5 bar, for a duration from 0.1 second to 4 seconds, preferably from 0.2 seconds to 3 seconds, more preferably from 0.3 seconds to 2 seconds, yet still more preferably from 0.5 seconds to 1 seconds.

Another aspect of the invention provides for a container having a direct contact heat seal between a first laminate and a second laminate of the invention (e.g., as previously described) wherein the direct seal is between the first sealing layer of the first sealing film of the first laminate and that of the second sealing layer of the second sealing film of the second laminate.

Another aspect of the invention provides a bag made from a direct contact heat sealed laminate of the present invention (e.g., as previously described) containing from 0.25 kg to 5 kg, preferably from 0.75 kg to 3 kg of product, wherein the product is preferably dry laundry detergent powder.

Another aspect of the invention provides for a method of making a closed pillow bag of product comprising the steps: (a) forming an opened pillow bag by direct contact heat sealing a single sheet of laminate of the present invention (e.g., as previously described); (b) filling the opened pillow bag with product, preferably wherein the product is dry laundry detergent; and (c) direct contact heat sealing the opening of the filled pillow bag to form the closed bag of product.

While the specification concludes with claims that particularly point out and distinctly claim the invention, it is believed the present invention will be better understood from the following description.

### BRIEF DESCRIPTION OF THE DRAWINGS

The embodiments set forth in the drawings are illustrative in nature and not intended to limit the invention defined by the claims. The following detailed description of the illustrative embodiments can be understood when read in conjunction with the following drawings, where like structure is indicated with like reference numerals and in which:
Figure 1 is a schematic cross sectional view of a laminate of the present invention.
Figure 2 is a schematic cross sectional view of a direct contact heat seal between two laminates of the present invention in a direct contact heat sealer.

### DETAILED DESCRIPTION OF THE INVENTION

In this specifications the following non-SI unit is used, which may be converted to the respective SI or metric unit according to the following conversion: 1 inch = 0.0254 m.

The following text sets forth a broad description of numerous different embodiments of the present disclosure. The description is to be construed as exemplary only and does not describe every possible embodiment since describing every possible embodiment would be impractical, if not impossible. It will be understood that any feature, characteristic, component, composition, ingredient, product, step or methodology described herein can be deleted, combined with or substituted for, in whole or part, any other feature, characteristic, component, composition, ingredient, product, step or methodology described herein. Numerous alternative embodiments could be implemented, using either current technology or technology developed after the filing date of this patent, which would still fall within the scope of the claims.

One aspect of the invention provides for a laminate having a printing film and sealing film laminated together. Another aspect of the invention provides for direct contact heat sealing these laminates (e.g., via VFFS) to construct containers. These laminates, and containers made from these laminates, are more recyclable given the high percentage of PE (vs. including other thermoplastic polymer types) and yet strong enough to withstand the mechanical stress typically associated with making and shipping these containers having products contained therein.

### Printing Film

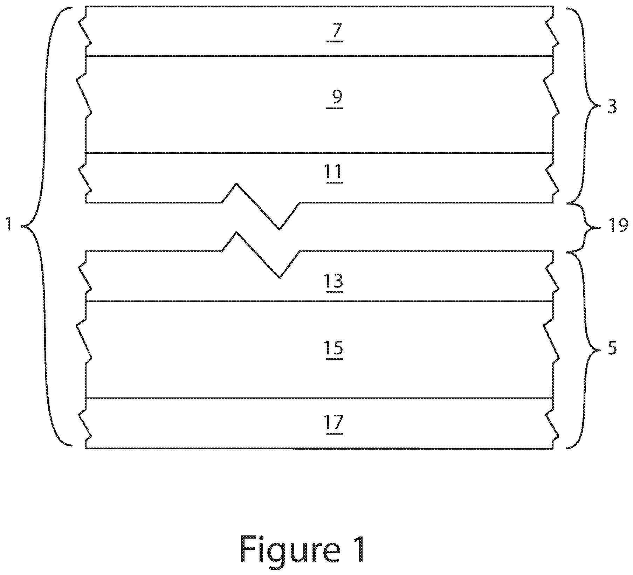

One aspect of the invention provides for at least a three layer co-extrusion blown printing film. Turning to figure 1, a laminate (1) is provided with a three layer co-extrusion blown printing film (3) and a three-layer co-extrusion blown sealing film (5) laminated together (to form the laminate). The printing film (3), in turn, has a surface layer of a first co-extrusion formulation (7), a middle layer of a second co-extrusion formulation (9), and a laminating layer of a third co-extrusion formulation (11). The middle layer of the printing film (9) is in between the surface layer of the printing film (7) and the laminating layer of the printing film (11). The printing film (3) may have additional layers; however, a three layer co-extrusion printing film is preferred. The printing film (3) is preferably printed, more preferably reverse printed (so that printing will not be rubbed off during handling). Printing or reverse printing is by conventional means. The co-extrusion blowing to make the multi-layer co-extrusion blown printing film is conventional. The first, second, and third (etc.) co-extrusion formulations are those formulations that are placed in the respect extruders and then blown (to make the multi-layer co-extrusion blown printing film).

Regarding the printing film (3), the middle film layer by weight of a second co-extrusion formulation (9) has the following: (i) 25 weight percent ("wt%") to 75 wt%, preferably 35-65 wt%, more preferably 40-60 wt%, yet more preferably 45- 55 wt%, of a linear low density polyethylene, preferably wherein the linear low density polyethylene is a metallocene linear low density polyethylene; (ii) 10 wt% to 50 wt%, preferably 15-45 wt%, more preferably 20-30 wt%, of a high density polyethylene; (iii) 10-40 wt%, preferably 20 -30 wt%, of an optional polyethylene polymer component; and (iv) wherein the wt% is relative to the second co-extrusion formulation.

Regarding the printing film (3), the laminating layer by weight of a third co-extrusion formulation (11) has the following: (i) 10 wt% to 50 wt%, preferably 15-45 wt%, more preferably 20-30 wt%, of a linear low density polyethylene, preferably wherein the linear low density polyethylene is a metallocene linear low density polyethylene; (ii) 25 wt% to 75 wt%, preferably 35-65 wt%, more preferably 40-60 wt%, yet more preferably 45-55 wt% of a high density polyethylene; (iii) 10 wt% to 40 wt%, preferably 20 -30 wt% of an optional polyethylene polymer component; and (iv) wherein the wt% is relative to the third co-extrusion formulation.

The laminate (1) may have a glossy appearance (i.e., a glossy laminate). Accordingly, and still regarding the printing film (3), the surface film layer by weight of a first co-extrusion formulation (7) has the following: (i) 70 wt% to 100 wt%, preferably 75-95 wt%, of a linear low density polyethylene, preferably wherein the linear low density polyethylene is a metallocene linear low density polyethylene; (ii) 0 wt% to 30 wt%, preferably from 5-25 wt%, of a polyethylene polymer component, preferably wherein the polyethylene polymer component is a low density polyethylene; and (iii) wherein the wt% is relative to the first co-extrusion formulation of the printing film. When the laminate (1) is a glossy laminate, preferably the optional polyethylene polymer of the middle film layer of the printing film (9) is a low density polyethylene; and the optional polyethylene polymer of the laminating film layer of the printing film (11) is a low density polyethylene (and preferably at the wt% previously described).

Alternatively the laminate (1) may have a matte appearance (i.e., a matte laminate). Accordingly, and still regarding the printing film (3), the surface layer by weight of a first co-extrusion formulation (7) has the following: (i) 75 wt% to 100 wt%, preferably 90-100 wt%, of a bimodal linear lower density polyethylene, preferably a bimodal butene linear lower density polyethylene; and (ii) wherein the wt% is relative to the first co-extrusion formulation of the printing film. When the laminate (1) is a matte laminate, preferably the optional polyethylene polymer of the middle layer of the printing film (9) is a bimodal linear lower density polyethylene, preferably a bimodal butene linear lower density polyethylene; and the optional polyethylene polymer of the laminating layer of the printing film (11) is a bimodal linear lower density polyethylene, preferably a bimodal butene linear lower density polyethylene (and preferably at the wt% previously described).

Preferably the printing film (3) has an overall thickness of 20 microns to 50 microns more preferably 20-50 microns, yet more preferably 25-35 microns, yet still more preferably from 25-30 microns as measured after extrusion blowing but before lamination.

Preferably the middle layer of the printing film (9) is thicker than either the surface layer of the printing film (7) or the laminating layer of the printing film (11), preferably the middle layer (9) is thicker than both the surface layer (7) and the laminating layer (11). The middle layer of the printing film (9) can be from 1.1 to 3 fold, preferably from 1.2 to 2 fold thicker than either the surface layer of the printing film (7) or the laminating layer of the printing film (11), preferably thicker than both the surface layer (7) and the laminating layer (11).

Preferably the printing film (3) comprises a high level of polyethylene to facilitate recycling. To this end, the printing film (3) preferably comprises at least 85 wt% of polyethylene by weight of the printing film, preferably at least 90 wt%, more preferably at least 95 wt%, yet more preferably at least 97 wt%, alternatively from 85 wt% to about 100 wt%. Yet more preferably the printing film (3) is substantially free or free of PET, yet even more preferably substantially free or free of PP and PET.

### Sealing Film

One aspect of the invention provides for at least a three layer co-extrusion blown sealing film. Turning to back figure 1, a laminate (1) is provided with a three layer co-extrusion blown printing film (3) and a three-layer co-extrusion blown sealing film (5) laminated together (to form the laminate (1)). The sealing film (5), in turn, has a laminating layer of a first co-extrusion formulation (13), a middle layer of a second co-extrusion formulation (15), and a sealing layer of a third co-extrusion formulation (17). The middle layer of the sealing film (15) is in-between the laminating layer and the sealing layer of the sealing film (13, 17, respectively). The sealing film (5) may have additional layers; however, a three layer co-extrusion sealing film is preferred. The extrusion blowing to make the multi-layer co-extrusion blown sealing film is conventional. The first, second, and third (etc.) co-extrusion formulations are those formulations that are placed in the respect extruders and then blown (to make the multi-layer co-extrusion blown sealing film).

Regarding the sealing film (5), the laminating layer by weight of a first co-extrusion formulation (13) has the following: (i) 50 wt% to 100 wt%, preferably from 60-90 wt%, of a multi-modal linear lower density polyethylene, preferably a bimodal linear lower density polyethylene, more preferably a bimodal butene linear lower density polyethylene; (ii) 0 wt% to 50 wt% of an optional polyethylene polymer component, preferably the optional polyethylene polymer component is 10-40 wt% of a high density polyethylene; and (iii) wherein the wt% is relative to the first co-extrusion formulation.

Regarding the sealing film (5), the middle layer by weight of a second co-extrusion formulation (15) has the following: (i) 50 wt% to 100 wt%, preferably from 65-95 wt% of a multi-modal linear lower density polyethylene, preferably a bimodal linear lower density polyethylene, more preferably a bimodal butene linear lower density polyethylene; (ii) 0 wt% to 50 wt% of an optional polymer component, preferably the optional polymer component is 5-35 wt%, and preferably wherein the optional polymer component is titanium dioxide dissolved in a polymeric carrier; and (iii) wherein the wt% is relative to the second co-extrusion formulation.

Regarding the sealing film (5), the sealing layer by weight of a third co-extrusion formulation (17) has the following: (i) 25 wt% to 60 wt%, preferably greater than 30 wt% to 60 wt%, more preferably 40-55 wt% of a plastomer, preferably an olefin plastomer; (ii) 25 wt% to 75 wt%, preferably from 35 - 65 wt%, more preferably 40 - 60 wt% of a multi-modal linear lower density polyethylene, preferably a bimodal linear lower density polyethylene, more preferably a bimodal butene linear lower density polyethylene; and (iii) 0 wt% to 50 wt%, preferably from 0 - 25 wt%, more preferably from 0 - 15 wt% of an optional polyethylene polymer component; (iv) wherein the wt% is relative to the third co-extrusion formulation.

Preferably the sealing film (5) has an overall thickness of 20 microns to 150 microns, more preferably 25-120 microns, yet more preferably 22-70 microns as measured after extrusion blowing but before lamination.

Preferably the middle layer of the sealing film (15) is thicker than either the sealing layer of the sealing film (17) or the laminating layer of the sealing film (13), preferably the middle layer (15) is thicker than both the sealing layer (17) and the laminating layer (13). The middle layer of the sealing film (15) can be from 1.1 to 3 fold, preferably from 1.2 to 2 fold thicker than either the sealing layer of the sealing film (17) or the laminating layer of the sealing film (13), preferably thicker than both.

Preferably the sealing film (5) comprises a high level of polyethylene to facilitate recycling. To this end, the sealing film (5) preferably comprises at least 85 wt% of polyethylene by weight of the sealing film (5), preferably at least 90 wt%, more preferably at least 95 wt%, yet more preferably at least 97 wt%, alternatively from 85 wt% to about 100 wt%. Yet more preferably the sealing film (5) is substantially free or free of PET, yet even more preferably substantially free or free of PP and PET.

### Lamination

A lamination of the present invention is made by combining the printing film and the sealing film (as previously described). Multiple ways of laminating films are known in the art. For example, dry lamination, solventless lamination, and extrusion lamination are known ways of combining films to form the laminate. In one embodiment, the laminate comprises an adhesive layer adhering the printed film and the sealing layer, preferably wherein the adhesive is polyurethane-based for solvent-less lamination; and for dry lamination, the adhesive could be polyurethane-based (dissolved in organic solvents) or acrylic acid-based (dissolved in water). Solvent-based dry lamination typically uses a two component polyurethane adhesive. Water-based dry lamination typically uses acrylic based adhesives. Solvent-less lamination typically use a one or two component polyurethane adhesive. One example of such the 2-component polyurethane-based adhesive for solvent-less lamination is MOR-FREE™ 706A/Coreactant C-79 from Dow Chemical where MOR-FREE™ 706A provides the NCO component and the Coreactant C-79 provides the -OH component for the formation of polyurethane. The adhesives may also be either "bio-identical" or "bio-new" materials. See e.g., Dow Chemical's soy-based polyol adhesives.

In one embodiment, the overall thickness of the laminate is 40 microns to 200 microns, preferably from 47 microns to 100 microns, more preferably from 52 microns to 95 microns. One suitable way to assess thickness is by SEM, in addition to various optical techniques.

Preferably the laminate comprises a high level of polyethylene to facilitate recycling. To this end, the laminate preferably comprises at least 85 wt% of polyethylene by weight of the laminate, preferably at least 90 wt%, more preferably at least 95 wt%, yet more preferably at least 97 wt%, alternatively from 85 wt% to about 100 wt%. Yet more preferably the laminate (1) is substantially free or free of PET, yet even more preferably substantially free or free of PP and PET.

### Heat Sealing

The laminates of the present invention can form a direct contact heat seal between each other by direct contact heat sealing the sealing layers of the respective laminates. The term "direct contact heat sealing" means using a constantly heated die or bar to apply heat to a specific area to seal the laminates together to form a heat seal. This is in contrast to impulse sealing. Typically conditions exerted by a direct contact heat sealer for direct contact heat sealing two opposing laminates in an industrial scale include: a temperature from 95° C to 130°C, preferably from 105° C to 120° C, for a pressure from 1 bar (100 kPa) to 6 bar (600 kPa) pressure, preferably from 2 bar to 5 bar, for a duration from 0.1 second to 4 seconds, preferably from 0.2 seconds to 3 seconds, more preferably from 0.3 seconds to 2 seconds, yet still more preferably from 0.5 seconds to 1 seconds.

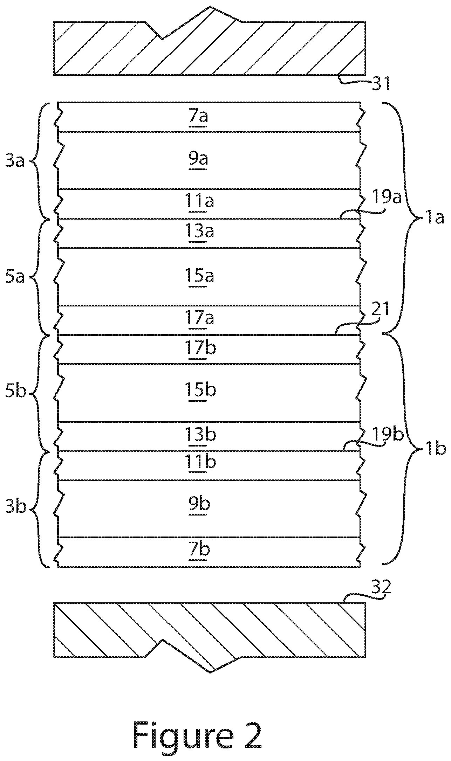

Turning to Figure 2, a first laminate (19a) and a second laminate (19b) are shown having a direct contact heat seal (31) therein between. Specially, the direct contact heat seal is between a sealing layer (17a) of the first laminate (19a) and a sealing layer (17b) of the second laminate (19b). The first and second laminates (19a, 19b) are in between a first face of a direct contact heat sealer (31) and an opposing second face of the direct contact heat sealer (31). The first face of the direct contact heat sealer (31) makes physical contact with the surface film layer (7a) of the first laminate (19a) and the second face of the direct contact heat sealer (32) makes physical contact with the surface film layer (7b) of the second laminate (19b). Heat and pressure are applied, over a defined period of time, to impart the direct contact heat seal between the two laminates (19a, 19b). The first laminate is constructed of a first 3 layer co-extrusion blown printing film (3a) laminated to a first 3-layer co-extrusion blown sealing film (5a) forming a first lamination seal (19a) therein between. The second laminate is constructed of a second 3 layer co-extrusion blown printing film (3b) laminated to a second 3-layer co-extrusion blown sealing film (5b) forming a second lamination seal (19b) therein between.

Regarding the first printing film (3a), a first middle layer (9a) is in between the first surface layer (7a) and the first laminating layer (11a). Regarding the first sealing film (5a), the first middle layer (15a) is in between the first laminating layer (13a) and the first sealing layer (17a). The first laminating layer (11a) of the first printing film (3a) forms a first lamination seal (19a) with the first laminating layer (13a) of the first sealing film (5a).

Regarding the second printing film (3b), a second middle layer (9b) is in between the second surface layer (7b) and the second laminating layer (11b). Regarding the second sealing film (5b), the second middle layer (15b) is in between the second laminating layer (13b) and the second sealing layer (17b). The second laminating layer (11b) of the second printing film (3b) forms a second lamination seal (19b) with the second laminating layer (13b) of the second sealing film (5b).

In another embodiment, the overall thickness of two laminates direct heat sealed together is 80 microns to 400 microns, preferably from 94 microns to 200 microns, more preferably from 104 microns to 190 microns. One suitable way to assess thickness is by SEM, in addition to various optical techniques.

### Container

Another aspect of the invention provides laminates (of the present invention) constructed into a container, preferably into a bag, more preferably a bag suitable for containing dry laundry detergent, using direct contact heat sealing in the construction of at least one aspect of the container. The term "bag" is used herein the broadest sense to include pouches, gusset bags, wicket bags, standup bags, pillow bags, pillow pouches, etc. The containers or bags of the present invention may have an opening feature. The term "opening feature" is defined as an aid to opening the bag that includes a weakening of a selected opening trajectory on the laminates.

One suitable way of making a bag or "pouch" is described in US 2013/0177265 at paragraph 28 to 30. However, the corners of the bag may also contain right angles consistent with standard pouches (see Figures 3-5 of US 2013/0177265). Briefly, a laminate of the present invention may be formed into a pillow bag by pulling and/or stretching the laminate around a forming tube to form a tube out of the laminate. The tube is formed by sealing the edges of the laminate in any direction such as the machine direction at any point or continuously, and/or by sealing the edges in the cross direction at either the leading edge and/or the trailing edge. The forming tube doubles as a filling tube, through which the product (e.g., dry laundry detergent) to be contained in the bag is then filled into the tube. The laminate is pulled or advanced in the machine direction, and the sealing jaw (of a direct contact heat sealer) simultaneously seals and cuts the trailing portion of the tube in the cross direction (i.e., orthogonal to the machine direction). This simultaneously releases the filled bag and forms a new seal at the leading edge. Machinery and techniques for forming such filled bags are often referred to as "auto-packing machines" and are well known in the art and are available from multiple suppliers around the world. Auto-packing machines are also often described in the industry as in-line packing and sealing machines, and/or vertical form-fill-seal (VFFS) machines.

### Container Containing Product

The containers of the present invention, especially bags, may contain relatively large amount of product. For example, the containers of the present invention may contain from 0.25 kg to 5 kg of product, preferably from 0.5 kg to 4 kg, more preferably from 0.5 kg to 4 kg, yet more preferably from 0.75 kg to 3 kg, alternatively from 1 kg to 3 kg, alternatively from 1 kg to 2 kg of product contained within the container (e.g., bag). Relatively large amounts of product include dry laundry detergent powder.

The containers of the present invention, especially bags, may have a total surface area from 1,600 cm² to 2,600 cm², preferably from 1,800 cm² to 2,400 cm², more preferably from 1,950 cm² to 2,250 cm², alternatively combinations thereof. Alternatively the total surface area of the container is from 2,000 cm² to 2,200 cm², alternatively from 2,100 cm² to 2,300 cm², alternatively from 2,000 cm² to 2,300 cm², alternatively combinations thereof. In one embodiment, the bag or container may have a plurality of pin holes to allow venting gases to escape from the interior of the bag or release gas that may have been captured during the packing process (i.e., to minimize volume for more efficient transportation).

The containers of the present invention, especially bags, may have a volume from 0.25 liters (1) to 5 1 of product, preferably from 0.5 1 to 4 1, more preferably from 0.5 1 to 41, yet more preferably from 0.75 1 to 3 1, alternatively from 11 to 3 1, alternatively from 11 to 2 1 of product contained within the container (e.g., bag).

### EXAMPLES

Non-limiting examples of three layer co-extrusion blown printing films and three layer co-extrusion sealing films of the present invention are provided in Tables 1 and 2 below, respectively.

**Table 1: Three layer co-extrusion blown printing films:**

| Overall Thickness^{A} (microns) | Film Type | Film Layer | Layer Components^{F} (weight %) | | | | Layer Distribution^{G} (microns) |
|---|---|---|---|---|---|---|---|
| | | | Bimodal C4LLDPE^{B} | M-LLDPE^{C} | HDPE^{D} | LDPE^{E} | |
| 25 | Glossy | Surface | 0 | 85 | 0 | 15 | 7.14 |
| | | Middle | 0 | 50 | 25 | 25 | 10.71 |
| | | Laminating | 0 | 25 | 50 | 25 | 7.14 |
| | | Overall: | 0 | 52.9 | 25.0 | 22.1 | |
| 30 | Glossy | Surface | 0 | 85 | 0 | 15 | 8.57 |
| | | Middle | 0 | 50 | 25 | 25 | 12.86 |
| | | Laminating | 0 | 25 | 50 | 25 | 8.57 |
| | | Overall: | 0 | 52.9 | 25.0 | 22.1 | |
| 30 | Matte | Surface | 100 | 0 | 0 | 0 | 8.57 |
| | | Middle | 25 | 50 | 25 | 0 | 12.86 |
| | | Laminating | 25 | 25 | 50 | 0 | 8.57 |
| | | Overall: | 46.4 | 28.6 | 25.0 | 0 | |

| | | | | | | | |
|---|---|---|---|---|---|---|---|
| ^{A} Thickness is measured after extrusion-blowing (but before lamination and before direct contact heat sealing). ^{B} Bimodal butene linear lower density polyethylene from Borourge FB2230. ^{C} Metallocene linear low density polyethylene from Dow Chemical: Dow5538 ^{D} High density polyethylene from ExxonMobil: HTA 108 ^{E} Low density polyethylene from ExxonMobil: LDPE 150 BW. ^{F} Exclusive of slip agents other adjunct ingredients that total less than 1 wt% of the total film weight. ^{G} Theoretical. | | | | | | | |

**Table 2: Three layer co-extrusion blown sealing films:**

| Overall Thickness^{A} (microns) | Film Layer | Layer Components^{F} (weight %) | | | | Layer Distribution ^{G} (microns) |
|---|---|---|---|---|---|---|
| | | Plastomer^{B} | White MB^{C} | Bimodal C4LLDPE^{D} | HDPE^{E} | |
| 25 | Laminating | 0 | 0 | 75 | 25 | 7.14 |
| | Middle | 0 | 20 | 80 | 0 | 10.71 |
| | Sealing | 50 | 0 | 50 | 0 | 7.14 |
| | Overall: | 14.3 | 8.6 | 70.0 | 7.1 | |
| 50 | Laminating | 0 | 0 | 75 | 25 | 14.29 |
| | Middle | 0 | 20 | 80 | 0 | 21.43 |
| | Sealing | 50 | 0 | 50 | 0 | 14.29 |
| | Overall: | 14.3 | 8.6 | 70.0 | 7.1 | 100% |
| 70 | Laminating | 0 | 0 | 75 | 25 | 20 |
| | Middle | 0 | 20 | 80 | 0 | 30 |
| | Sealing | 50 | 0 | 50 | 0 | 20 |
| | Overall: | 14.3 | 8.6 | 70.0 | 7.1 | 100% |

| | | | | | | |
|---|---|---|---|---|---|---|
| ^{A} Thickness is measured after extrusion-blowing (but before lamination and before direct contact heat sealing). ^{B} Plastomer is from The Dow Chemical Company: Affinity™ PL 1881G (polyolefin plastomer), density at 0.904 g/cm³ per ASTM D792. See also Dow Technical Information Form No. 400-00071424en, rev: 2012-01-11. ^{C} White master batch including titanium dioxide in a LDPE and/or LLDP carrier. One suitable example is 7M1508 from Shang Hai JinZhu Master Batch Company (China). ^{D} Bimodal butene linear lower density polyethylene from Borourge FB2230. ^{E} High density polyethylene from ExxonMobil: HTA 108. ^{F} Exclusive of slip agents (e.g., oleamide or erucamide), antiblock (e.g., silica) and other adjunct ingredients that total less than 1 wt% of the total film weight. ^{G} Theoretical. | | | | | | |

Turning to Tables 3A to 3D, laminates are made by laminating printing films and sealing films described above by conventional water-based dry lamination, and then direct contact heat sealed. Specific conditions of the direct contact heat sealing are: Tables 3A and 3C are at a direct contact heat seal temperature of 120° C, at 3 bar pressure, and for time duration of 0.5 seconds; while Tables 3B and 3D are at a direct contact heat seal temperature of 140° C, at 3 bar pressure, and for time duration of 0.5 seconds. A direct contact heat seal is formed between each of the laminates respective sealing layers. The strength of the direct contact heat seal is tested according to ASTM F-88M-09 ("Standard Test Method for Seal Strength of Flexible Barrier Materials").

**Table 3A: Direct contact heat seal strength of matte finish laminate is provided, wherein the laminate has: (i) 25 micron thick three layer co-extrusion blown printing film of a matte film type of Table 1 above; and (ii) 25 micron thick three layer co-extrusion blown sealing film identified in Table 2 above.**

| Matte finish laminate having overall thickness of 50 microns* | | |
|---|---|---|
| | Seal Strength (N/inch) | |
| | Cross Direction | Machine Direction |
| Number of samples test (N=) | 15 | 15 |
| Average | 34.2 | 44.5 |
| Minimum | 33.0 | 40.3 |
| Maximum | 35.5 | 46.3 |

| | | |
|---|---|---|
| *Overall thickness of the laminate is a result of measuring the overall thickness of the printing film and the sealing film after lamination. | | |

**Table 3B: Direct contact heat seal strength of glossy finish laminate is provided, wherein the laminate has: (i) 30 micron thick three layer co-extrusion blown printing film of a glossy film type of Table 1 above; and (ii) 50 micron thick three layer co-extrusion blown sealing film identified in Table 2 above.**

| Glossy finish laminate having overall thickness of 80 microns* | | |
|---|---|---|
| | Seal Strength (N/inch) | |
| | Cross Direction | Machine Direction |
| Number of samples test (N=) | 15 | 15 |
| Average | 36.5 | 46.0 |
| Minimum | 34.5 | 43.8 |
| Maximum | 39.1 | 46.9 |

| | | |
|---|---|---|
| *Overall thickness of the laminate is a result of measuring the overall thickness of the printing film and the sealing film after lamination. | | |

**Table 3C: Direct contact heat seal strength of glossy finish laminate is provided, wherein the laminate has: (i) 25 micron thick three layer co-extrusion blown printing film of a glossy film type of Table 1 above; and (ii) 25 micron thick three layer co-extrusion blown sealing film identified in Table 2 above.**

| Glossy finish laminate having overall thickness of 50 microns* | | |
|---|---|---|
| | Seal Strength (N/inch) | |
| | Cross Direction | Machine Direction |
| Number of samples test (N=) | 15 | 15 |
| Average | 25.0 | 34.9 |
| Minimum | 23.9 | 32.8 |
| Maximum | 25.9 | 37.9 |

| | | |
|---|---|---|
| *Overall thickness of the laminate is a result of measuring the overall thickness of the printing film and the sealing film after lamination. | | |

**Table 3D: Direct contact heat seal strength of matte finish laminate is provided, wherein the laminate has: (i) 30 micron thick three layer co-extrusion blown printing film of a matte film type of Table 1 above; and (ii) 70 micron thick three layer co-extrusion blown sealing film identified in Table 2 above.**

| Matte finish laminate having overall thickness of 100 microns* | | |
|---|---|---|
| | Seal Strength (N/inch) | |
| | Cross Direction | Machine Direction |
| Number of samples test (N=) | 15 | 15 |
| Average | 38.3 | 47.0 |
| Minimum | 36.7 | 45.9 |
| Maximum | 39.6 | 48.9 |

| | | |
|---|---|---|
| *Overall thickness of the laminate is a result of measuring the overall thickness of the printing film and the sealing film after lamination. | | |

One aspect of the invention provides for a direct heat seal in the sealing layers of the respective laminates (or in a container made from respective laminates), wherein the direct contact heat seal is characterized by having an average direct contact heat seal strength according to ASTM F-88M-09 of either: (i) at least 15 N/inch, preferably at least 23 N/inch, more preferably at least 25 N/inch, alternatively at least 35 N/inch, alternatively at least 36 N/inch, in the cross direction; or (ii) at least 20 N/inch, preferably at least 25 N/inch, more preferably at least 30 N/inch, alternatively at least 34 N/inch, alternatively at least 45 N/inch, in the machine direction; and preferably the direct contact heat seal strengths of both the aforementioned cross direction and the machine direction.

Turning to Table 4 and Tables 5a1-5g2, pillow bags filled with dry laundry detergent product are made from various laminates and are: (i) evaluated for wrinkles - which are unacceptable from a consumer visual perspective connoting low quality; and (ii) subjected to a "Drop Test" - to assess whether the bag can withstand typically forces associated with manufacture, and shipping and handling. Both tests are a pass/fail tests. The "Drop Test," as herein defined, is conducted on the manufacturing packing line by an employee manually holding a secondary bag that holds, a plurality of the subject pillow bags containing product, totaling about 12 kg of weight. The secondary bag is a typical polywoven shipping bag. The employee raises the secondary bag (containing the 12 kg of pillow bags containing product) 1 meter above the ground and then drops the secondary bag to the ground. This is repeated for a total of three times. The test is a pass/fail test. If any portion of the pillow bag(s) visibly shows any breakage, then the bag fails the test. The subject pillow bags are a variety of sizes but will contain from 1.7 kg to 2.8 kg of dry laundry detergent. The pillow bags generally have two types of direct contact heat seals. A first type is at the top and bottom of the bag. The top direct contact seal is horizontally across the pillow bag and is the location of the handle. The bottom direct contact is seal is also horizontally across the pillow bag but at the bottom of the pillow bag (and opposing the top direct contact seal). Zigzag direct contact heat sealer is used for the top and bottom direct contact heat seals of the pillow bag. An example of a zigzag direct contact heat sealer is described in the publication of international application number PCT/CN2015/076052 (P&G Case AA922M) at page 16 to 17, and figure 4 thereof. The direct contact heat sealing conditions for this first type are direct contact sealing the sealing layers of the respective laminates at a temperature of 115° C, for a pressure of 5 bar, for 0.45 seconds. A second type of direct contact seal is vertically down the back of the pillow bag (between the top and bottom direct contact heat seals), a so-called fin seal. A flat direct contact sealer is used for the fin seal. The direct contact heat sealing conditions for this second type are direct contact sealing the sealing layers of the respective laminates at a temperature of 115° C, for a pressure of 5 bar, for 0.50 seconds. The pillow bags are made consistent with conventional VFFS systems employing direct contact heat sealers.

Table 4 summarizes the results ("pass/fail") for wrinkles and the Drop Test for various laminates. Tables 5a1-5g2 describe the various printing films and sealing films used to make the laminates tested in Table 4.

Table 4: Summarizes the results from seven legs looking at various laminates. In short, legs 1-5 failed for either having wrinkles and/or failing the Drop Test. Only legs 6-7 passed. Accordingly, those laminates tested in legs 1-5 are outside the scope of the invention. Pillow bags are made by a conventional VFFS method employing direct contact heat sealing. See for example 1, at page 11 of WO 2012/094791 but a "curved seal (132)" is not employed, but rather a standard square one. The printing film and the sealing film are laminated by conventional water-based dry lamination. Direct contact heat sealing conditions for each leg are specified.

**Table 4: Results of seven legs at various laminates regarding wrinkles and Drop Test.**

| Leg | Film Type | Printing Layer ID | Sealing Layer ID | Plastomer Type and wt% in sealing layer of sealing film of laminate | Results: |
|---|---|---|---|---|---|
| 1 | Matte | A | B | Mitsui SP0510† | Fail: Wrinkles and Drop Test |
| | | | | 50wt% | |
| 2 | Glossy | C | B | Mitsui SP0510 | Fail: Fail: Wrinkles and Drop Test |
| | | | | 50wt% | |
| 3 | Glossy | D | E | Dow1881G* | Fail: Drop Test |
| | | | | 20 wt% | |
| 4 | Glossy | D | F | Dow1881G | Fail: Wrinkles |
| | | | | 60 wt% | |
| 5 | Matte | G | F | Dow1881G | Fail: Wrinkles |
| | | | | 60 wt% | |
| 6 | Glossy | H | J | Dow1881G | Pass |
| | | I | K | 50 wt% | |
| | | I | L | | |
| 7 | Matte | M | K | Dow1881G | Pass |
| | | M | L | 50 wt% | |
| | | N | J | | |

| | | | | | |
|---|---|---|---|---|---|
| † The Mitsui SP0510 plastomer is from Mitsui Chemicals. * The "Dow1881G" plastomer is from The Dow Chemical Company: Affinity™ PL 1881G (polyolefin plastomer), density at 0.904 g/cm³ per ASTM D792. See also Dow Technical Information Form No. 400-00071424en, rev: 2012-01-11. | | | | | |

Tables 5a1-5g2 describe the printing layer of sealing layer of the laminates used to make the pillow bags tested in Legs 1 - 7 in above Table 4. Definitions of various terms used in the Tables 5a1-5g2 are provided.

"Mitsui Plastomer" means "Mitsui SP0510" from Mitsui Chemicals.

"Dow 1881" means Affinity™ PL 1881G from The Dow Chemical Company.

"White MB" means white master batch including titanium dioxide in a LDPE and/or LLDP carrier. One suitable supplier is 7M1508 from Shang Hai JinZhu Master Batch Company (China).

"Overall Thickness" is measured post lamination and is in microns.

"Layer Distribution" is theoretical and is in microns.

"Regular C4-C6 LLDPE" is ExxonMobil.

"Bimodal Middle Density PE" is Borourge FB2230.

"LDPE" is low density polyethylene from ExxonMobil: LDPE 150 BW.

"Bimodal C4LLDPE" means bimodal butene linear lower density polyethylene from Borourge FB2230.

"HDPE" means high density polyethylene from ExxonMobil: HTA 108

"LDPE" means low density polyethylene from ExxonMobil: LDPE 150 BW.

"M-LLDPE" means metallocene linear low density polyethylene from Dow Chemical: Dow5538

"Layer Components" are exclusive of slip agents other adjunct ingredients that total less than 1 wt% of the total film weight.

The printing and sealing layers from Legs 1-7 are described.

### Leg 1: Printing layer and sealing layer defined:

**Table5a1: Printing Layer Co-extrusion Blown Film:**

| ID | Overall Thick - ness | Film Type | Film Layer | Layer Components (weight %) | | Layer Distribution |
|---|---|---|---|---|---|---|
| | | | | Regular C4-C6 LLDPE | LDPE | |
| A | 30 | Glossy | Surface | 75 | 25 | 8.57 |
| | | | Middle | 75 | 25 | 12.86 |
| | | | Laminating | 75 | 25 | 8.57 |
| | | | Overall: | 75 | 25 | |

**Table 5a2: Sealing Layer Co-extrusion Blown Film:**

| ID | Overall Thick - ness | Film Layer | Layer Components (weight %) | | | | | Layer Distribution |
|---|---|---|---|---|---|---|---|---|
| | | | Mitsui Plastomer | White MB | Bimodal C4LLDPE | M-LLDPE | LDPE | |
| B | 50 | Laminating | 0 | 0 | 75 | 25 | 0 | 14.29 |
| | | Middle | 0 | 20 | 0 | 0 | 80 | 21.43 |
| | | Sealing | 50 | 0 | 0 | 25 | 25 | 14.29 |
| | | Overall: | 14 | 9 | 21 | 14 | 41 | |

### Leg 2: Printing layer and sealing layer defined:

**Table 5b1: Printing Layer Co-extrusion Blown Film:**

| ID | Overall Thick - ness | Film Type | Film Layer | Layer Components (weight %) | Layer Distribution |
|---|---|---|---|---|---|
| | | | | Bimodal Middle Density PE | |
| C | 30 | Matte | Surface | 100 | 8.57 |
| | | | Middle | 100 | 12.86 |
| | | | Laminating | 100 | 8.57 |
| | | | Overall: | | |

**Table 5b2: Sealing Layer Co-extrusion Blown Film:**

| ID | Overall Thick - ness | Film Layer | Layer Components (weight %) | | | | | Layer Distribution |
|---|---|---|---|---|---|---|---|---|
| | | | Mitsui Plastomer | White MB | Bimodal C4LLDPE | M-LLDPE | LDPE | |
| B | 50 | Laminating | 0 | 0 | 75 | 25 | 0 | 14.29 |
| | | Middle | 0 | 20 | 0 | 0 | 80 | 21.43 |
| | | Sealing | 50 | 0 | 0 | 25 | 25 | 14.29 |
| | | Overall: | 14.3 | 8.6 | 21.4 | 14.3 | 41.4 | |

### Leg 3: Printing layer and sealing layer defined:

**Table 5c1: Printing Layer Co-extrusion Blown Film:**

| ID | Overall Thick - ness | Film Type | Film Layer | Layer Components (weight %) | | | Layer Distribution |
|---|---|---|---|---|---|---|---|
| | | | | HDPE | Regular C4-C6 LLDPE | LDPE | |
| D | 30 | Glossy | Surface | 0 | 75 | 25 | 8.57 |
| | | | Middle | 50 | 25 | 25 | 12.86 |
| | | | Laminating | 25 | 50 | 25 | 8.57 |
| | | | Overall: | 28.6 | 46.4 | 25.0 | |

**Table 5c2: Sealing Layer Co-extrusion Blown Film:**

| ID | Overall Thick - ness | Film Layer | Layer Components (weight %) | | | | Layer Distribution |
|---|---|---|---|---|---|---|---|
| | | | Dow 1881 Plastomer | White MB | Bimodal C4LLDPE | HDPE | |
| E | 50 | Laminating | 0 | 0 | 75 | 25 | 14.29 |
| | | Middle | 0 | 20 | 80 | 0 | 21.43 |
| | | Sealing | 20 | 0 | 80 | 0 | 14.29 |
| | | Overall: | 5.7 | 8.6 | 78.6 | 7.1 | |

### Leg 4: Printing layer and sealing layer defined:

**Table 5d1: Printing Layer Co-extrusion Blown Film:**

| ID | Overall Thick - ness | Film Type | Film Layer | Layer Components (weight %) | | | Layer Distrib ution |
|---|---|---|---|---|---|---|---|
| | | | | HDPE | Regular C4-C6 LLDPE | LDPE | |
| D | 30 | Glossy | Surface | 0 | 75 | 25 | 8.57 |
| | | | Middle | 50 | 25 | 25 | 12.86 |
| | | | Laminating | 25 | 50 | 25 | 8.57 |
| | | | Overall: | 28 | 46.4 | 25.0 | |

**Table 5d2: Sealing Layer Co-extrusion Blown Film:**

| ID | Overall Thick - ness | Film Layer | Layer Components (weight %) | | | | Layer Distribution |
|---|---|---|---|---|---|---|---|
| | | | Dow 1881 Plastomer | White MB | Bimodal C4LLDPE | HDPE | |
| F | 50 | Laminating | 0 | 0 | 75 | 25 | 14.29 |
| | | Middle | 0 | 20 | 80 | 0 | 21.43 |
| | | Sealing | 60 | 0 | 40 | 0 | 14.29 |
| | | Overall: | 17.1 | 8.6 | 67.2 | 7.1 | |

### Leg 5: Printing layer and sealing layer defined:

**Table 5e1: Printing Layer Co-extrusion Blown Film:**

| ID | Overall Thickness | Film Type | Film Layer | Layer Components (weight %) | Layer Distribution |
|---|---|---|---|---|---|
| | | | | Bimodal C4 LLDPE | |
| G | 30 | Glossy | Surface | 100 | 8.57 |
| | | | Middle | 100 | 12.86 |
| | | | Laminating | 100 | 8.57 |
| | | | Overall: | 100 | |

**Table 5e2: Sealing Layer Co-extrusion Blown Film:**

| ID | Overall Thickness | Film Layer | Layer Components (weight %) | | | | Layer Distribution |
|---|---|---|---|---|---|---|---|
| | | | Dow 1881 Plastomer | White MB | Bimodal C4 LLDPE | HDPE | |
| F | 50 | Laminating | 0 | 0 | 75 | 25 | 14.29 |
| | | Middle | 0 | 20 | 80 | 0 | 21.43 |
| | | Sealing | 60 | 0 | 40 | 0 | 14.29 |
| | | Overall: | 17.1 | 8.6 | 67.2 | 7.1 | |

### Leg 6: Printing layer and sealing layer defined:

**Table 5f1: Printing Layer Co-extrusion Blown Film:**

| ID | Overall Thick - ness | Film Type | Film Layer | Layer Components (weight %) | | | | Layer Distribution |
|---|---|---|---|---|---|---|---|---|
| | | | | Bimodal C4LLDPE | M -LLDPE | HDPE | LDPE | |
| H | 25 | Glossy | Surface | 0 | 85 | 0 | 15 | 7.14 |
| | | | Middle | 0 | 50 | 25 | 25 | 10.71 |
| | | | Laminating | 0 | 25 | 50 | 25 | 7.14 |
| | | | Overall: | 0 | 52.9 | 25.0 | 22.1 | |
| I | 30 | Glossy | Surface | 0 | 85 | 0 | 15 | 8.57 |
| | | | Middle | 0 | 50 | 25 | 25 | 12.86 |
| | | | Laminating | 0 | 25 | 50 | 25 | 8.57 |
| | | | Overall: | 0 | 52.9 | 25.0 | 22.1 | |

**Table 5f2: Sealing Layer Co-extrusion Blown Film:**

| ID | Overall Thick - ness (microns) | Film Layer | Layer Components (weight %) | | | | Layer Distribution |
|---|---|---|---|---|---|---|---|
| | | | Dow1881 Plastomer | White MB | Bimodal C4 LLDPE | HDPE | |
| J | 25 | Laminating | 0 | 0 | 75 | 25 | 7.14 |
| | | Middle | 0 | 20 | 80 | 0 | 10.71 |
| | | Sealing | 50 | 0 | 50 | 0 | 7.14 |
| | | Overall: | 14.3 | 8.6 | 70.0 | 7.1 | |
| K | 50 | Laminating | 0 | 0 | 75 | 25 | 14.29 |
| | | Middle | 0 | 20 | 80 | 0 | 21.43 |
| | | Sealing | 50 | 0 | 50 | 0 | 14.29 |
| | | Overall: | 14.3 | 8.6 | 70.0 | 7.1 | |
| L | 70 | Laminating | 0 | 0 | 75 | 25 | 20 |
| | | Middle | 0 | 20 | 80 | 0 | 30 |
| | | Sealing | 50 | 0 | 50 | 0 | 20 |
| | | Overall: | 14.3 | 8.6 | 70.0 | 7.1 | |

### Leg 7: Printing layer and sealing layer defined:

**Table 5g1: Printing Layer Co-extrusion Blown Film:**

| ID | Overall Thick - ness | Film Type | Film Layer | Layer Components (weight %) | | | | Layer Distrib ution |
|---|---|---|---|---|---|---|---|---|
| | | | | Bimodal C4LLDPE | M -LLDPE | HDPE | LDPE | |
| M | 30 | Matt | Surface | 100 | 0 | 0 | 0 | 8.57 |
| | | | Middle | 25 | 50 | 25 | 0 | 12.86 |
| | | | Laminating | 25 | 25 | 50 | 0 | 8.57 |
| | | | Overall: | 46.4 | 28.6 | 25.0 | 0 | |
| N | 25 | Matt | Surface | 100 | 0 | 0 | 0 | 7.14 |
| | | | Middle | 25 | 50 | 25 | 0 | 10.71 |
| | | | Laminating | 25 | 25 | 50 | 0 | 7.14 |
| | | | Overall: | 46.4 | 28.6 | 25.0 | 0 | |

**Table 5g2: Sealing Layer Co-extrusion Blown Film:**

| ID | Overall Thick - ness | Film Layer | Layer Components (weight %) | | | | Layer Distribution |
|---|---|---|---|---|---|---|---|
| | | | Dow 1881 Plastomer | White MB | Bimodal C4 LLDPE | HDPE | |
| J | 25 | Laminating | 0 | 0 | 75 | 25 | 7.14 |
| | | Middle | 0 | 20 | 80 | 0 | 10.71 |
| | | Sealing | 50 | 0 | 50 | 0 | 7.14 |
| | | Overall: | 14.3 | 8.6 | 70.0 | 7.1 | |
| K | 50 | Laminating | 0 | 0 | 75 | 25 | 14.29 |
| | | Middle | 0 | 20 | 80 | 0 | 21.43 |
| | | Sealing | 50 | 0 | 50 | 0 | 14.29 |
| | | Overall: | 14.3 | 8.6 | 70.0 | 7.1 | |
| L | 70 | Laminating | 0 | 0 | 75 | 25 | 20 |
| | | Middle | 0 | 20 | 80 | 0 | 30 |
| | | Sealing | 50 | 0 | 50 | 0 | 20 |
| | | Overall: | 14.3 | 8.6 | 70.0 | 7.1 | |

One aspect of the present invention provides for a container, wherein the container having a direct contact heat seal between a first and second laminate of the present invention, wherein the container passes the Drop Test (as earlier described). Another aspect provides such a container without visible (with the unaided eye) wrinkles.

One variable that ostensibly influenced the results of Table 4 is the type of plastomer used. Specially, Dow 1881 (Affinity™ PL 1881G from The Dow Chemical Company) is preferred over Mitsui Plastomer (Mitsui SP0510™ from Mitsui Chemicals). In the specification literature from the respective manufactures, Dow 1881 is reported to have a density of 0.902g/cm³ base value according to ASTM D792. In contrast, Mitsui Plastomer has a density of 0.904g/cm³ according to ISO1183. Accordingly, the density of the plastomer may an important factor on direct contact heat sealing in the context of the present invention. One aspect of the present invention provides the use of a plastomer (in the sealing layer, of the sealing film, (of the laminate)) that is a polyolefin plastomer, wherein the polyolefin plastomer has a density of 0.902g/cm³ base value according to ASTM D792.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A laminate (1) comprises a printing film (3) and a sealing film (5), wherein
(a) the printing film (3) is at least a three layer co-extrusion blown printing film comprising:
(i) a surface layer of a first co-extrusion formulation (7);
(ii) a middle layer by weight of a second co-extrusion formulation (9) comprising:
a. 25 weight percent ("wt%") to 75 wt% of a linear low density polyethylene;
b. 10 wt% to 50 wt% of a high density polyethylene;
c. 10 wt% to 40 wt% of an optional polyethylene polymer component; and
d. wherein the wt% is relative to the second co-extrusion formulation;
(iii) a laminating layer by weight of a third co-extrusion formulation (11) comprising:
a. 10 wt% to 50 wt% of a linear low density polyethylene;
b. 25 wt% to 75 wt% of a high density polyethylene;
c. 10 wt% to 40 wt% of an optional polyethylene polymer component;
d. wherein the wt% is relative to the third co-extrusion formulation; and
e. wherein the middle layer of the printing film (9) is in between the surface layer of the printing film (7) and the laminating layer of the printing film (11); and
(b) the sealing film (5) is at least a three layer co-extrusion blown sealing film comprising:
(i) a laminating layer by weight of a first co-extrusion formulation (13) comprising:
a. 50 wt% to 100 wt% of a multi-modal linear lower density polyethylene;
b. 0 wt% to 50 wt% of an optional polyethylene polymer component; and
c. wherein the wt% is relative to the first co-extrusion formulation;
(ii) a middle layer by weight of a second co-extrusion formulation (15) comprising:
a. 50 wt% to 100 wt% of a multi-modal linear lower density polyethylene;
b. 0 wt% to 50 wt% of an optional polymer component; and
c. wherein the wt% is relative to the second co-extrusion formulation;
(iii) a sealing layer by weight of a third co-extrusion formulation (17) comprising:
a. 25 wt% to 60 wt% of a plastomer;
b. 25 wt% to 75 wt% of a multi-modal linear lower density polyethylene;
c. 0 wt% to 50 wt% of an optional polyethylene polymer component;
d. wherein the wt% is relative to the third co-extrusion formulation; and
e. wherein the middle layer of the sealing film (15) is in between the laminating layer of the sealing film (13) and the sealing layer of the sealing film (17); and
(c) wherein the laminating layer of the printing film (11) is laminated to the laminating layer of the sealing film (13).

2. The laminate (1) of claim 1, wherein:
the printing film (3) having an overall thickness of 20 microns to 50 microns as measured after extrusion blowing but before lamination; and
the sealing film (5) having an overall thickness of 20 microns to 150 microns as measured after extrusion blowing but before lamination.

3. The laminate (1) of claim 1 or 2, wherein:
(a) the printing film (3) comprising:
(i) the surface layer (7) of the first co-extrusion formulation;
(ii) the middle layer (9) by weight of the second co-extrusion formulation comprising:
a. 35-65 wt% of the metallocene the linear low density polyethylene, preferably the linear low density polyethylene is a metallocene linear low density polyethylene;
b. 15-45 wt% of the high density polyethylene; and
c. 20 -30 wt% of the optional polyethylene polymer component;
(iii) the laminating layer (11) by weight of the third co-extrusion formulation comprising:
a. 15-45 wt% the linear low density polyethylene;
b. 35-65 wt% of the high density polyethylene; and
c. 20 -30 wt% of the optional polyethylene polymer component; and
(iv) wherein the printing film (3) having an overall thickness of 20-50 microns;
(b) the sealing film (5) comprising:
(i) the laminating layer (13) of the first co-extrusion formulation comprising:
a. 60-90 wt% of the multi-modal linear lower density polyethylene; and
b. 10-40 wt% of the optional polyethylene polymer component;
(ii) a middle layer (15) of the second co-extrusion formulation comprising:
a. 65-95 wt% of the multi-modal linear lower density polyethylene; and
b. 5-35 wt% of the optional polymer component;
(iii) a sealing layer (17) of a third co-extrusion formulation comprising:
a. greater than 35 wt% to 55 wt% of the plastomer;
b. 35 - 65 wt% of the multi-modal linear lower density polyethylene; and
c. 0 - 25 wt%, of the optional polyethylene polymer component; and
(iv) wherein the sealing film (5) having the overall thickness of 25-120 microns.

4. The laminate (1) of any one of the preceding claims, wherein
(a) the printing film (3) having only three layers, wherein the three layers comprise:
(i) the surface layer (7) of the first co-extrusion formulation;
(ii) the middle layer (9) by weight of the second co-extrusion formulation comprising:
a. 45-55 wt% of the metallocene linear low density polyethylene;
b. 20-30 wt% of the high density polyethylene; and
c. 20 -30 wt% of the optional polyethylene polymer component;
(iii) the laminating layer (11) by weight of the third co-extrusion formulation comprising:
a. 20-30 wt% the metallocene linear low density polyethylene;
b. 45-55 wt% of the high density polyethylene; and
c. 20 -30 wt% of the optional polyethylene polymer component;
(iv) wherein the printing film (3) having an overall thickness of 25-35 microns; and
(v) the printing film (3) is printed;
(b) the sealing film (5) having only three layers, wherein the three layers comprise:
(i) the laminating layer (13) of the first co-extrusion formulation comprising:
a. 60-90 wt% of the bimodal butene linear lower density polyethylene; and
b. 10-40 wt% of the optional polyethylene polymer component, wherein the optional polyethylene polymer component is the high density polyethylene;
(ii) the middle layer (15) of the second co-extrusion formulation comprising:
a. 65-95 wt% of the bimodal butene linear lower density polyethylene; and
b. 5-35 wt% of the optional polymer component, wherein the optional polymer component is titanium dioxide dissolved in a polymeric carrier;
(iii) the sealing layer (17) of a third co-extrusion formulation comprising:
a. 40-55 wt% of the olefin plastomer having a density greater than 0.900 g/cm³ per ASTM D792;
b. 40 - 60 wt% of the bimodal butene linear lower density polyethylene; and
c. 0 - 15 wt% of the optional polyethylene polymer component; and
(iv) wherein the sealing film (5) has the overall thickness of 22-70 microns.

5. The laminate (1) of any one of the preceding claims, wherein the laminate (1) is a glossy laminate, and wherein the surface layer (7) by weight of the first co-extrusion formulation of the printing film comprises:
(i) 70 wt% to 100 wt% of a metallocene linear low density polyethylene;
(ii) 0 wt% to 30 wt% of a polyethylene polymer component; and
(iii) wherein the wt% is relative to the first co-extrusion formulation of the printing film.

6. The glossy laminate of claim 5, wherein the optional polyethylene polymer component of the middle layer of the printing film (9) is a low density polyethylene; and the optional polyethylene polymer component of the laminating layer of the printing film (11) is a low density polyethylene.

7. The laminate (1) of any one of claims 1-4, wherein the laminate (1) is a matte laminate, and wherein the surface layer (7) by weight of the first co-extrusion formulation of the printing film comprises: (i) 75% to 100 wt%, of a bimodal linear lower density polyethylene; and (ii) wherein the wt% is relative to the first co-extrusion formulation of the printing film.

8. The matte laminate of claim 7, wherein the optional polyethylene polymer of the middle layer of the printing film (9) is a bimodal linear lower density polyethylene; and the optional polyethylene polymer of the laminating layer of the printing film (11) is a bimodal linear lower density polyethylene.

9. The laminate (1) of any one of the preceding claims,
wherein the middle layer of the printing film (9) is of a greater thickness compared to either the surface layer of the printing film (7) or the laminating layer of the printing film (11)); and
wherein the middle layer of the sealing film (15) is of a greater thickness compared to either the laminating layer of the sealing film (13) or the sealing layer of the sealing film (17).

10. The laminate (1) of any one of the preceding claims, wherein the plastomer is a polyolefin plastomer.

11. The laminate (1) of any one of the preceding claims, lamination of the printing film (3) and the sealing film (5) is by solvent-based dry lamination or water-based dry lamination.

12. The laminate (1) of any one of the preceding claims, having at least 85 wt% of polyethylene by weight of the laminate (1).

13. A container having a direct contact heat seal between a first laminate (1a) and second laminate (1b), wherein:
(A) the first laminate (1a): comprises a first printing film (3a) and a first sealing film (5a), wherein :
(a) the first printing film (3a) is a three layer co-extrusion blown printing film having:
(i) a first surface layer (7a) of a first co-extrusion formulation;
(ii) a first middle layer (9a) by weight of the second co-extrusion formulation having:
a. 25 wt% to 75 wt% of a metallocene linear low density polyethylene;
b. 10 wt% to 50 wt% of a high density polyethylene;
c. 10 wt% to 40 wt% of an optional polyethylene polymer component; and
d. wherein the wt% is relative to the second co-extrusion formulation;
(iii) a first laminating layer (11a) by weight of the third co-extrusion formulation having:
a. 10 wt% to 50 wt% of a metallocene linear low density polyethylene;
b. 25 wt% to 75 wt% of a high density polyethylene;
c. 10 wt% to 40 wt% of an optional polyethylene polymer component;
d. wherein the wt% is relative to the third co-extrusion formulation; and
e. wherein the first middle layer of the first printing film (9a) is in between the first surface layer of the first printing film (7a) and the first laminating layer of the first printing film (11a); and
(b) the first sealing film (5a) is a three layer co-extrusion blown sealing film having:
(i) a first laminating layer of a first co-extrusion formulation (13a) having:
a. 50 wt% to 100 wt% of a multi-modal linear lower density polyethylene;
b. 0 wt% to 50 wt% of an optional polyethylene polymer component; and
c. wherein the wt% is relative to the first co-extrusion formulation;
(ii) a first middle layer of a second co-extrusion formulation (15a) having:
a. 50 wt% to 100 wt% of a multi-modal linear lower density polyethylene;
b. 0 wt% to 50 wt% of an optional polymer component; and
c. wherein the wt% is relative to the second co-extrusion formulation.
(iii) a first sealing layer of a third co-extrusion formulation (17a) having:
a. 25 wt% to 60 wt% of a plastomer;
b. 25 wt% to 75 wt% of a multi-modal linear lower density polyethylene;
c. 0 wt% to 50 wt% of an optional polyethylene polymer component;
d. wherein the wt% is relative to the third co-extrusion formulation; and
e. wherein the first middle layer of the first sealing film (15a) is in between the first laminating layer of the first sealing film (13a) and the first sealing layer of the first sealing film (17a); and
(c) wherein the first laminating layer of the first printing film (11a) is laminated to the first laminating layer of the first sealing film (13a);
(B) the second laminate (1b): comprises a second printing film (3b) and a second sealing film (5b), wherein :
(a) the second printing film (3b) is a three layer co-extrusion blown printing film having:
(i) a second surface layer (7b) of a first co-extrusion formulation;
(ii) a second middle layer (9b) by weight of the second co-extrusion formulation having:
a. 25 wt% to 75 wt% of a metallocene linear low density polyethylene;
b. 10 wt% to 50 wt% of a high density polyethylene;
c. 10 wt% to 40 wt% of an optional polyethylene polymer component; and
d. wherein the wt% is relative to the second co-extrusion formulation;
(iii) a second laminating layer (11b) by weight of the third co-extrusion formulation having:
a. 10 wt% to 50 wt% of a metallocene linear low density polyethylene;
b. 25 wt% to 75 wt% of a high density polyethylene;
c. 10 wt% to 40 wt% of an optional polyethylene polymer component;
d. wherein the wt% is relative to the third co-extrusion formulation; and
e. wherein the second middle layer of the second printing film (9b) is in between the second surface layer of the second printing film (7b) and the second laminating layer of the second printing film (11b); and
(b) the second sealing film (5b) is a three layer co-extrusion blown sealing film having:
(i) a second laminating layer of a first co-extrusion formulation (13b) having:
a. 50 wt% to 100 wt% of a multi-modal linear lower density polyethylene;
b. 0 wt% to 50 wt% of an optional polyethylene polymer component; and
c. wherein the wt% is relative to the first co-extrusion formulation;
(ii) a second middle layer of a second co-extrusion formulation (15b) having:
a. 50 wt% to 100 wt% of a multi-modal linear lower density polyethylene;
b. 0 wt% to 50 wt% of an optional polymer component; and
c. wherein the wt% is relative to the second co-extrusion formulation.
(iii) a second sealing layer of a third co-extrusion formulation (17b) having:
a. 25 wt% to 60 wt% of a plastomer;
b. 25 wt% to 75 wt% of a multi-modal linear lower density polyethylene;
c. 0 wt% to 50 wt% of an optional polyethylene polymer component;
d. wherein the wt% is relative to the third co-extrusion formulation; and
e. wherein the first middle layer of the first sealing film (15a) is in between the second laminating layer of the second sealing film (13b) and the second sealing layer of the second sealing film (17b); and
(c) wherein the second laminating layer of the second printing film (11b) is laminated to the second laminating layer of the second sealing film (13b); and
(C) wherein the direct seal is between the first sealing layer (17a) of the first laminate (1a) and the second sealing layer (17a) of the second laminate (1b).

14. The container having a direct contact heat seal of claim 13, wherein the direct contact heat seal is **characterized by** having an average direct contact heat seal strength according to ASTM F-88M-09 of either: (i) at least 15 N/inch (590.6 N/m), preferably at least 23N/ inch (905.5 N/m), more preferably at least 25 N/inch (984.3 N/m), in the cross direction; or (ii) at least 20N/inch (787.4 N/m), in the machine direction.

15. A method of making a container comprising the step of forming a direct contact heat seal between two laminates of any one described in claim 1-12 by direct contact heat sealing the sealing layers of the respective laminates at a temperature from 95° C to 130°C, for a pressure from 1 bar (100 kPa) to 6 bar (600 kPa) pressure, for a duration from 0.1 second to 4 seconds.

## Patentansprüche

1. Laminat (1) umfasst eine Druckfolie (3) und eine Siegelfolie (5), wobei
(a) die Druckfolie (3) mindestens eine dreischichtige Coextrusionsblasdruckfolie ist, umfassend:
(i) eine Oberflächenschicht einer ersten Coextrusionsformulierung (7);
(ii) eine mittlere Schicht, umfassend bezogen auf das Gewicht einer zweiten Coextrusionsformulierung (9):
a. 25 Gewichtsprozent ("Gew.-%") bis 75 Gew.-% eines linearen Polyethylens niedriger Dichte;
b. 10 Gew.-% bis 50 Gew.-% eines Polyethylens hoher Dichte;
c. 10 Gew.-% bis 40 Gew.-% eines optionalen Polyethylenpolymerbestandteils; und
d. wobei sich die Gew.-% auf die zweite Coextrusionsformulierung beziehen;
(iii) eine Laminierungsschicht, umfassend bezogen auf das Gewicht einer dritten Coextrusionsformulierung (11):
a. 10 Gew.-% bis 50 Gew.-% eines linearen Polyethylens niedriger Dichte;
b. 25 Gew.-% bis 75 Gew.-% eines Polyethylens hoher Dichte;
c. 10 Gew.-% bis 40 Gew.-% eines optionalen Polyethylenpolymerbestandteils;
d. wobei sich die Gew.-% auf die dritte Coextrusionsformulierung beziehen; und
e. wobei die mittlere Schicht der Druckfolie (9) zwischen der Oberflächenschicht der Druckfolie (7) und der Laminierungsschicht der Druckfolie (11) liegt; und
(b) die Siegelfolie (5) mindestens eine dreischichtige Coextrusionsblassiegelfolie ist, umfassend:
(i) eine Laminierungsschicht, umfassend bezogen auf das Gewicht einer ersten Coextrusionsformulierung (13):
a. 50 Gew.-% bis 100 Gew.-% eines multimodalen linearen Polyethylens niedrigerer Dichte;
b. 0 Gew.-% bis 50 Gew.-% eines optionalen Polyethylenpolymerbestandteils; und
c. wobei sich die Gew.-% auf die erste Coextrusionsformulierung beziehen;
(ii) eine mittlere Schicht, umfassend bezogen auf das Gewicht einer zweiten Coextrusionsformulierung (15):
a. 50 Gew.-% bis 100 Gew.-% eines multimodalen linearen Polyethylens niedrigerer Dichte;
b. 0 Gew.-% bis 50 Gew.-% eines optionalen Polymerbestandteils; und
c. wobei sich die Gew.-% auf die zweite Coextrusionsformulierung beziehen;
(iii) eine Siegelschicht, umfassend bezogen auf das Gewicht einer dritten Coextrusionsformulierung (17):
a. 25 Gew.-% bis 60 Gew.-% eines Plastomers;
b. 25 Gew.-% bis 75 Gew.-% eines multimodalen linearen Polyethylens niedrigerer Dichte;
c. 0 Gew.-% bis 50 Gew.-% eines optionalen Polyethylenpolymerbestandteils;
d. wobei sich die Gew.-% auf die dritte Coextrusionsformulierung beziehen; und
e. wobei die mittlere Schicht der Siegelfolie (15) zwischen der Laminierungsschicht der Siegelfolie (13) und der Siegelschicht der Siegelfolie (17) liegt; und
(c) wobei die Laminierungsschicht der Druckfolie (11) an die Laminierungsschicht der Siegelfolie (13) laminiert ist.

2. Laminat (1) nach Anspruch 1, wobei:
die Druckfolie (3), gemessen nach dem Extrusionsblasen, aber vor dem Laminieren, eine Gesamtdicke von 20 Mikrometern bis 50 Mikrometern aufweist; und
die Siegelfolie (5), gemessen nach dem Extrusionsblasen, aber vor dem Laminieren, eine Gesamtdicke von 20 Mikrometern bis 150 Mikrometern aufweist.

3. Laminat (1) nach Anspruch 1 oder 2, wobei:
(a) die Druckfolie (3) Folgendes umfasst:
(i) die Oberflächenschicht (7) der ersten Coextrusionsformulierung;
(ii) die mittlere Schicht (9), umfassend bezogen auf das Gewicht der zweiten Coextrusionsformulierung:
a. 35-65 Gew.-% des Metallocens, das lineare Polyethylen niedriger Dichte, wobei das lineare Polyethylen niedriger Dichte vorzugsweise ein lineares Metallocen-Polyethylen niedriger Dichte ist;
b. 15-45 Gew.-% des Polyethylens hoher Dichte; und
c. 20-30 Gew.-% des optionalen Polyethylenpolymerbestandteils;
(iii) die Laminierungsschicht (11), umfassend bezogen auf das Gewicht der dritten Coextrusionsformulierung:
a. 15-45 Gew.-% des linearen Polyethylens niedriger Dichte;
b. 35-65 Gew.-% des Polyethylens hoher Dichte; und
c. 20-30 Gew.-% des optionalen Polyethylenpolymerbestandteils; und
(iv) wobei die Druckfolie (3) eine Gesamtdicke von 20-50 Mikrometern aufweist;
(b) die Siegelfolie (5) Folgendes umfasst:
(i) die Laminierungsschicht (13) der ersten Coextrusionsformulierung, umfassend:
a. 60-90 Gew.-% des multimodalen linearen Polyethylens niedrigerer Dichte; und
b. 10-40 Gew.-% des optionalen Polyethylenpolymerbestandteils;
(ii) eine mittlere Schicht (15) der zweiten Coextrusionsformulierung, umfassend:
a. 65-95 Gew.-% des multimodalen linearen Polyethylens niedrigerer Dichte; und
b. 5-35 Gew.-% des optionalen Polymerbestandteils;
(iii) eine Siegelschicht (17) einer dritten Coextrusionsformulierung, umfassend:
a. mehr als 35 Gew.-% bis 55 Gew.-% des Plastomers;
b. 35-65 Gew.-% des multimodalen linearen Polyethylens niedrigerer Dichte; und
c. 0-25 Gew.-% des optionalen Polyethylenpolymerbestandteils; und
(iv) wobei die Siegelfolie (5) die Gesamtdicke von 25-120 Mikrometern aufweist.

4. Laminat (1) nach einem der vorstehenden Ansprüche, wobei
(a) die Druckfolie (3) nur drei Schichten aufweist, wobei die drei Schichten Folgendes umfassen:
(i) die Oberflächenschicht (7) der ersten Coextrusionsformulierung;
(ii) die mittlere Schicht (9), umfassend bezogen auf das Gewicht der zweiten Coextrusionsformulierung:
a. 45-55 Gew.-% des linearen Metallocen-Polyethylens niedriger Dichte;
b. 20-30 Gew.-% des Polyethylens hoher Dichte; und
c. 20-30 Gew.-% des optionalen Polyethylenpolymerbestandteils;
(iii) die Laminierungsschicht (11), umfassend bezogen auf das Gewicht der dritten Coextrusionsformulierung:
a. 20-30 Gew.-% des linearen Metallocen-Polyethylens niedriger Dichte;
b. 45-55 Gew.-% des Polyethylens hoher Dichte; und
c. 20-30 Gew.-% des optionalen Polyethylenpolymerbestandteils;
(iv) wobei die Druckfolie (3) eine Gesamtdicke von 25-35 Mikrometern aufweist; und
(v) die Druckfolie (3) bedruckt ist;
(b) die Siegelfolie (5) nur drei Schichten aufweist, wobei die drei Schichten Folgendes umfassen:
(i) die Laminierungsschicht (13) der ersten Coextrusionsformulierung, umfassend:
a. 60-90 Gew.-% des bimodalen linearen Buten-Polyethylens niedrigerer Dichte; und
b. 10-40 Gew.-% des optionalen Polyethylenpolymerbestandteils, wobei der optionale Polyethylenpolymerbestandteil das Polyethylen hoher Dichte ist;
(ii) die mittlere Schicht (15) der zweiten Coextrusionsformulierung, umfassend:
a. 65-95 Gew.-% des bimodalen linearen Buten-Polyethylens niedrigerer Dichte; und
b. 5-35 Gew.-% des optionalen Polymerbestandteils, wobei der optionale Polymerbestandteil Titandioxid ist, das in einem polymeren Träger gelöst ist;
(iii) die Siegelschicht (17) einer dritten Coextrusionsformulierung, umfassend:
a. 40-55 Gew.-% des Olefinplastomers mit einer Dichte von mehr als 0,900 g/cm³ gemäß ASTM D792;
b. 40-60 Gew.-% des bimodalen linearen Buten-Polyethylens niedrigerer Dichte; und
c. 0-15 Gew.-% des optionalen Polyethylenpolymerbestandteils; und
(iv) wobei die Siegelfolie (5) die Gesamtdicke von 22-70 Mikrometern aufweist.

5. Laminat (1) nach einem der vorstehenden Ansprüche, wobei das Laminat (1) ein glänzendes Laminat ist und wobei die Oberflächenschicht (7), bezogen auf das Gewicht der ersten Coextrusionsformulierung der Druckfolie, Folgendes umfasst:
(i) 70 Gew.-% bis 100 Gew.-% eines linearen Metallocen-Polyethylens niedriger Dichte;
(ii) 0 Gew.-% bis 30 Gew.-% eines Polyethylenpolymerbestandteils; und
(iii) wobei sich die Gew.-% auf die erste Coextrusionsformulierung der Druckfolie beziehen.

6. Glänzendes Laminat nach Anspruch 5, wobei der optionale Polyethylenpolymerbestandteil der mittleren Schicht der Druckfolie (9) ein Polyethylen niedriger Dichte ist; und der optionale Polyethylenpolymerbestandteil der Laminierungsschicht der Druckfolie (11) ein Polyethylen niedriger Dichte ist.

7. Laminat (1) nach einem der Ansprüche 1 bis 4, wobei das Laminat (1) ein mattes Laminat ist und wobei die Oberflächenschicht (7), bezogen auf das Gewicht der ersten Coextrusionsformulierung der Druckfolie, Folgendes umfasst: (i) 75 % bis 100 Gew.-% eines bimodalen linearen Polyethylens niedrigerer Dichte; und (ii) wobei sich die Gew.-% auf die erste Coextrusionsformulierung der Druckfolie beziehen.

8. Mattes Laminat nach Anspruch 7, wobei das optionale Polyethylenpolymer der mittleren Schicht der Druckfolie (9) ein bimodales lineares Polyethylen niedrigerer Dichte ist; und das optionale Polyethylenpolymer der Laminierungsschicht der Druckfolie (11) ein bimodales lineares Polyethylen niedrigerer Dichte ist.

9. Laminat (1) nach einem der vorstehenden Ansprüche,
wobei die mittlere Schicht der Druckfolie (9) eine größere Dicke aufweist als entweder die Oberflächenschicht der Druckfolie (7) oder die Laminierungsschicht der Druckfolie (11)); und
wobei die mittlere Schicht der Siegelfolie (15) eine größere Dicke aufweist als entweder die Laminierungsschicht der Siegelfolie (13) oder die Siegelschicht der Siegelfolie (17).

10. Laminat (1) nach einem der vorstehenden Ansprüche, wobei das Plastomer ein Polyolefinplastomer ist.

11. Laminat (1) nach einem der vorstehenden Ansprüche, wobei die Laminierung der Druckfolie (3) und der Siegelfolie (5) durch Trockenlaminierung auf Lösungsmittelbasis oder Trockenlaminierung auf Wasserbasis erfolgt.

12. Laminat (1) nach einem der vorstehenden Ansprüche, das mindestens 85 Gew.-% Polyethylen, bezogen auf das Gewicht des Laminats (1), aufweist.

13. Behälter mit einer Direktkontaktheißsiegelung zwischen einem ersten Laminat (1a) und einem zweiten Laminat (1b), wobei:
(A) das erste Laminat (1a): eine erste Druckfolie (3a) und eine erste Siegelfolie (5a) umfasst, wobei:
(a) die erste Druckfolie (3a) eine dreischichtige Coextrusionsblasdruckfolie ist, die Folgendes aufweist:
(i) eine erste Oberflächenschicht (7a) einer ersten Coextrusionsformulierung;
(ii) eine erste mittlere Schicht (9a), die bezogen auf das Gewicht der zweiten Coextrusionsformulierung Folgendes aufweist:
a. 25 Gew.-% bis 75 Gew.-% eines linearen Metallocen-Polyethylens niedriger Dichte;
b. 10 Gew.-% bis 50 Gew.-% eines Polyethylens hoher Dichte;
c. 10 Gew.-% bis 40 Gew.-% eines optionalen Polyethylenpolymerbestandteils; und
d. wobei sich die Gew.-% auf die zweite Coextrusionsformulierung beziehen;
(iii) eine erste Laminierungsschicht (11a), die bezogen auf das Gewicht der dritten Coextrusionsformulierung Folgendes aufweist:
a. 10 Gew.-% bis 50 Gew.-% eines linearen Metallocen-Polyethylens niedriger Dichte;
b. 25 Gew.-% bis 75 Gew.-% eines Polyethylens hoher Dichte;
c. 10 Gew.-% bis 40 Gew.-% eines optionalen Polyethylenpolymerbestandteils;
d. wobei sich die Gew.-% auf die dritte Coextrusionsformulierung beziehen; und
e. wobei die erste mittlere Schicht der ersten Druckfolie (9a) zwischen der ersten Oberflächenschicht der ersten Druckfolie (7a) und der ersten Laminierungsschicht der ersten Druckfolie (11a) liegt; und
(b) die erste Siegelfolie (5a) eine dreischichtige Coextrusionsblassiegelfolie ist, die Folgendes aufweist:
(i) eine erste Laminierungsschicht einer ersten Coextrusionsformulierung (13a), die Folgendes aufweist:
a. 50 Gew.-% bis 100 Gew.-% eines multimodalen linearen Polyethylens niedrigerer Dichte;
b. 0 Gew.-% bis 50 Gew.-% eines optionalen Polyethylenpolymerbestandteils; und
c. wobei sich die Gew.-% auf die erste Coextrusionsformulierung beziehen;
(ii) eine erste mittlere Schicht einer zweiten Coextrusionsformulierung (15a), die Folgendes aufweist:
a. 50 Gew.-% bis 100 Gew.-% eines multimodalen linearen Polyethylens niedrigerer Dichte;
b. 0 Gew.-% bis 50 Gew.-% eines optionalen Polymerbestandteils; und
c. wobei sich die Gew.-% auf die zweite Coextrusionsformulierung beziehen.
(iii) eine erste Siegelschicht einer dritten Coextrusionsformulierung (17a), die Folgendes aufweist:
a. 25 Gew.-% bis 60 Gew.-% eines Plastomers;
b. 25 Gew.-% bis 75 Gew.-% eines multimodalen linearen Polyethylens niedrigerer Dichte;
c. 0 Gew.-% bis 50 Gew.-% eines optionalen Polyethylenpolymerbestandteils;
d. wobei sich die Gew.-% auf die dritte Coextrusionsformulierung beziehen; und
e. wobei die erste mittlere Schicht der ersten Siegelfolie (15a) zwischen der ersten Laminierungsschicht der ersten Siegelfolie (13a) und der ersten Siegelschicht der ersten Siegelfolie (17a) liegt; und
(c) wobei die erste Laminierungsschicht der ersten Druckfolie (11a) an die erste Laminierungsschicht der ersten Siegelfolie (13a) laminiert ist;
(B) das zweite Laminat (1b): eine zweite Druckfolie (3b) und eine zweite Siegelfolie (5b) umfasst, wobei:
(a) die zweite Druckfolie (3b) eine dreischichtige Coextrusionsblasdruckfolie ist, die Folgendes aufweist:
(i) eine zweite Oberflächenschicht (7b) einer ersten Coextrusionsformulierung;
(ii) eine zweite mittlere Schicht (9b), die bezogen auf das Gewicht der zweiten Coextrusionsformulierung Folgendes aufweist:
a. 25 Gew.-% bis 75 Gew.-% eines linearen Metallocen-Polyethylens niedriger Dichte;
b. 10 Gew.-% bis 50 Gew.-% eines Polyethylens hoher Dichte;
c. 10 Gew.-% bis 40 Gew.-% eines optionalen Polyethylenpolymerbestandteils; und
d. wobei sich die Gew.-% auf die zweite Coextrusionsformulierung beziehen;
(iii) eine zweite Laminierungsschicht (11b), die bezogen auf das Gewicht der dritten Coextrusionsformulierung Folgendes aufweist:
a. 10 Gew.-% bis 50 Gew.-% eines linearen Metallocen-Polyethylens niedriger Dichte;
b. 25 Gew.-% bis 75 Gew.-% eines Polyethylens hoher Dichte;
c. 10 Gew.-% bis 40 Gew.-% eines optionalen Polyethylenpolymerbestandteils;
d. wobei sich die Gew.-% auf die dritte Coextrusionsformulierung beziehen; und
e. wobei die zweite mittlere Schicht der zweiten Druckfolie (9b) zwischen der zweiten Oberflächenschicht der zweiten Druckfolie (7b) und der zweiten Laminierungsschicht der zweiten Druckfolie (11b) liegt; und
(b) die zweite Siegelfolie (5b) eine dreischichtige Coextrusionsblassiegelfolie ist, die Folgendes aufweist:
(i) eine zweite Laminierungsschicht einer ersten Coextrusionsformulierung (13b), die Folgendes aufweist:
a. 50 Gew.-% bis 100 Gew.-% eines multimodalen linearen Polyethylens niedrigerer Dichte;
b. 0 Gew.-% bis 50 Gew.-% eines optionalen Polyethylenpolymerbestandteils; und
c. wobei sich die Gew.-% auf die erste Coextrusionsformulierung beziehen;
(ii) eine zweite mittlere Schicht einer zweiten Coextrusionsformulierung (15b), die Folgendes aufweist:
a. 50 Gew.-% bis 100 Gew.-% eines multimodalen linearen Polyethylens niedrigerer Dichte;
b. 0 Gew.-% bis 50 Gew.-% eines optionalen Polymerbestandteils; und
c. wobei sich die Gew.-% auf die zweite Coextrusionsformulierung beziehen.
(iii) eine zweite Siegelschicht einer dritten Coextrusionsformulierung (17b), die Folgendes aufweist:
a. 25 Gew.-% bis 60 Gew.-% eines Plastomers;
b. 25 Gew.-% bis 75 Gew.-% eines multimodalen linearen Polyethylens niedrigerer Dichte;
c. 0 Gew.-% bis 50 Gew.-% eines optionalen Polyethylenpolymerbestandteils;
d. wobei sich die Gew.-% auf die dritte Coextrusionsformulierung beziehen; und
e. wobei die erste mittlere Schicht der ersten Siegelfolie (15a) zwischen der zweiten Laminierungsschicht der zweiten Siegelfolie (13b) und der zweiten Siegelschicht der zweiten Siegelfolie (17b) liegt; und
(c) wobei die zweite Laminierungsschicht der zweiten Druckfolie (11b) an die zweite Laminierungsschicht der zweiten Siegelfolie (13b) laminiert ist; und
(C) wobei die Direktsiegelung zwischen der ersten Siegelschicht (17a) des ersten Laminats (1a) und der zweiten Siegelschicht (17a) des zweiten Laminats (1b) erfolgt.

14. Behälter mit einer Direktkontaktheißsiegelung nach Anspruch 13, wobei die Direktkontaktheißsiegelung **dadurch gekennzeichnet ist, dass** sie eine durchschnittliche Direktkontaktheißsiegelungsfestigkeit gemäß ASTM F-88 M-09 von entweder: (i) mindestens 15 N/Zoll (590,6 N/m), vorzugsweise mindestens 23 N/Zoll (905,5 N/m), weiter bevorzugt mindestens 25 N/Zoll (984,3 N/m), in der Querrichtung; oder (ii) mindestens 20 N/Zoll (787,4 N/m) in der Maschinenlaufrichtung aufweist.

15. Verfahren zur Herstellung eines Behälters, umfassend den Schritt des Bildens einer Direktkontaktheißsiegelung zwischen zwei Laminaten nach einem der Ansprüche 1-12 durch Direktkontaktheißsiegeln der Siegelschichten der jeweiligen Laminate bei einer Temperatur von 95 °C bis 130 °C für einen Druck von 1 bar (100 kPa) bis 6 bar (600 kPa) für eine Dauer von 0,1 Sekunden bis 4 Sekunden.

## Revendications

1. Stratifié (1) qui comprend un film d'impression (3) et un film de scellage (5), dans lequel
(a) le film d'impression (3) est au moins un film d'impression soufflé par coextrusion à trois couches comprenant :
(i) une couche superficielle d'une première formulation de coextrusion (7) ;
(ii) une couche intermédiaire en poids d'une deuxième formulation de coextrusion (9) comprenant :
a. 25 pour cent en poids (« % en poids ») à 75 % en poids d'un polyéthylène linéaire basse densité ;
b. 10 % en poids à 50 % en poids d'un polyéthylène haute densité ;
c. 10 % en poids à 40 % en poids d'un composant polymère polyéthylène facultatif ; et
d. dans lequel le % en poids est par rapport à la deuxième formulation de coextrusion ;
(iii) une couche de stratification en poids d'une troisième formulation de coextrusion (11) comprenant :
a. 10 % en poids à 50 % en poids d'un polyéthylène linéaire basse densité ;
b. 25 % en poids à 75 % en poids d'un polyéthylène haute densité ;
c. 10 % en poids à 40 % en poids d'un composant polymère polyéthylène facultatif ;
d. dans lequel le % en poids est par rapport à la troisième formulation de coextrusion ; et
e. dans lequel la couche intermédiaire du film d'impression (9) est entre la couche superficielle du film d'impression (7) et la couche de stratification du film d'impression (11) ; et
(b) le film de scellage (5) est au moins un film de scellage soufflé par coextrusion à trois couches comprenant :
(i) une couche de stratification en poids d'une première formulation de coextrusion (13) comprenant :
a. 50 % en poids à 100 % en poids d'un polyéthylène linéaire multimodal basse densité ;
b. 0 % en poids à 50 % en poids d'un composant polymère polyéthylène facultatif ; et
c. dans lequel le % en poids est par rapport à la première formulation de coextrusion ;
(ii) une couche intermédiaire en poids d'une deuxième formulation de coextrusion (15) comprenant :
a. 50 % en poids à 100 % en poids d'un polyéthylène linéaire multimodal basse densité ;
b. 0 % en poids à 50 % en poids d'un composant polymère facultatif ; et
c. dans lequel le % en poids est par rapport à la deuxième formulation de coextrusion ;
(iii) une couche de scellage en poids d'une troisième formulation de coextrusion (17) comprenant :
a. 25 % en poids à 60 % en poids d'un plastomère ;
b. 25 % en poids à 75 % en poids d'un polyéthylène linéaire multimodal basse densité ;
c. 0 % en poids à 50 % en poids d'un composant polymère polyéthylène facultatif ;
d. dans lequel le % en poids est par rapport à la troisième formulation de coextrusion ; et
e. dans lequel la couche intermédiaire du film de scellage (15) est entre la couche de stratification du film de scellage (13) et la couche de scellage du film de scellage (17) ; et
(c) dans lequel la couche de stratification du film d'impression (11) est stratifiée à la couche de stratification du film de scellage (13).

2. Stratifié (1) selon la revendication 1, dans lequel :
le film d'impression (3) a une épaisseur globale de 20 micromètres à 50 micromètres telle que mesurée après extrusion-soufflage mais avant stratification ; et
le film de scellage (5) a une épaisseur globale de 20 micromètres à 150 micromètres telle que mesurée après extrusion-soufflage mais avant stratification.

3. Stratifié (1) selon la revendication 1 ou 2, dans lequel :
(a) le film d'impression (3) comprend :
(i) la couche superficielle (7) de la première formulation de coextrusion ;
(ii) la couche intermédiaire (9) en poids de la deuxième formulation de coextrusion comprenant :
a. 35 à 65 % en poids du métallocène du polyéthylène linéaire basse densité, de préférence le polyéthylène linéaire basse densité est un polyéthylène linéaire basse densité de métallocène ;
b. 15 à 45 % en poids du polyéthylène haute densité ; et
c. 20 à 30 % en poids du composant polymère polyéthylène facultatif ;
(iii) la couche de stratification (11) en poids de la troisième formulation de coextrusion comprenant :
a. 15 à 45 % en poids du polyéthylène linéaire basse densité ;
b. 35 à 65 % en poids du polyéthylène haute densité ; et
c. 20 à 30 % en poids du composant polymère polyéthylène facultatif ; et
(iv) dans lequel le film d'impression (3) a une épaisseur globale de 20 à 50 micromètres ;
(b) le film de scellage (5) comprenant :
(i) la couche de stratification (13) de la première formulation de coextrusion comprenant :
a. 60 à 90 % en poids du polyéthylène linéaire multimodal basse densité ; et
b. 10 à 40 % en poids du composant polymère polyéthylène facultatif ;
(ii) une couche intermédiaire (15) de la deuxième formulation de coextrusion comprenant :
a. 65 à 95 % en poids du polyéthylène linéaire multimodal basse densité ; et
b. 5 à 35 % en poids du composant polymère facultatif ;
(iii) une couche de scellage (17) d'une troisième formulation de coextrusion comprenant :
a. plus de 35 % en poids à 55 % en poids du plastomère ;
b. 35 à 65 % en poids du polyéthylène linéaire multimodal basse densité ; et
c. 0 à 25 % en poids, du composant polymère polyéthylène facultatif ; et
(iv) dans lequel le film de scellage (5) a l'épaisseur globale de 25 à 120 micromètres.

4. Stratifié (1) selon l'une quelconque des revendications précédentes, dans lequel
(a) le film d'impression (3) n'ayant que trois couches, dans lequel les trois couches comprennent :
(i) la couche superficielle (7) de la première formulation de coextrusion ;
(ii) la couche intermédiaire (9) en poids de la deuxième formulation de coextrusion comprenant :
a. 45 à 55 % en poids du polyéthylène linéaire basse densité de métallocène ;
b. 20 à 30 % en poids du polyéthylène haute densité ; et
c. 20 à 30 % en poids du composant polymère polyéthylène facultatif ;
(iii) la couche de stratification (11) en poids de la troisième formulation de coextrusion comprenant :
a. 20 à 30 % en poids du polyéthylène linéaire basse densité de métallocène ;
b. 45 à 55 % en poids du polyéthylène haute densité ; et
c. 20 à 30 % en poids du composant polymère polyéthylène facultatif ;
(iv) dans lequel le film d'impression (3) a une épaisseur globale de 25 à 35 micromètres ; et
(v) le film d'impression (3) est imprimé ;
(b) le film de scellage (5) n'ayant que trois couches, dans lequel les trois couches comprennent :
(i) la couche de stratification (13) de la première formulation de coextrusion comprenant :
a. 60 à 90 % en poids du polyéthylène linéaire basse densité de butène bimodal ; et
b. 10 à 40 % en poids du composant polymère polyéthylène facultatif, dans lequel le composant polymère polyéthylène facultatif est le polyéthylène haute densité ;
(ii) la couche intermédiaire (15) de la deuxième formulation de coextrusion comprenant :
a. 65 à 95 % en poids du polyéthylène linéaire basse densité de butène bimodal ; et
b. 5 à 35 % en poids du composant polymère facultatif, dans lequel le composant polymère facultatif est du dioxyde de titane dissous dans un support polymère ;
(iii) la couche de scellage (17) d'une troisième formulation de coextrusion comprenant :
a. 40 à 55 % en poids du plastomère d'oléfine ayant une masse volumique supérieure à 0,900 g/cm³ selon ASTM D792 ;
b. 40 à 60 % en poids du polyéthylène linéaire basse densité de butène bimodal ; et
c. 0 à 15 % en poids du composant polymère polyéthylène facultatif ; et
(iv) dans lequel le film de scellage (5) a l'épaisseur globale de 22 à 70 micromètres.

5. Stratifié (1) selon l'une quelconque des revendications précédentes, dans lequel le stratifié (1) est un stratifié brillant, et dans lequel la couche superficielle (7) en poids de la première formulation de coextrusion du film d'impression comprend :
(i) 70 % en poids à 100 % en poids d'un polyéthylène linéaire basse densité de métallocène ;
(ii) 0 % en poids à 30 % en poids d'un composant polymère polyéthylène ; et
(iii) dans lequel le % en poids est par rapport à la première formulation de coextrusion du film d'impression.

6. Stratifié brillant selon la revendication 5, dans lequel le composant polymère polyéthylène facultatif de la couche intermédiaire du film d'impression (9) est un polyéthylène basse densité ; et le composant polymère polyéthylène facultatif de la couche de stratification du film d'impression (11) est un polyéthylène basse densité.

7. Stratifié (1) selon l'une quelconque des revendications 1 à 4, dans lequel le stratifié (1) est un stratifié mat, et dans lequel la couche superficielle (7) en poids de la première formulation de coextrusion du film d'impression comprend : (i) 75 % à 100 % en poids, d'un polyéthylène linéaire bimodal de plus basse densité ; et (ii) dans lequel le % en poids est par rapport à la première formulation de coextrusion du film d'impression.

8. Stratifié mat selon la revendication 7, dans lequel le polymère polyéthylène facultatif de la couche intermédiaire du film d'impression (9) est un polyéthylène linéaire bimodal de plus basse densité ; et le polymère polyéthylène facultatif de la couche de stratification du film d'impression (11) est un polyéthylène linéaire bimodal de plus basse densité.

9. Stratifié (1) selon l'une quelconque des revendications précédentes,
dans lequel la couche intermédiaire du film d'impression (9) est d'une épaisseur plus grande par comparaison avec l'une ou l'autre de la couche superficielle du film d'impression (7) ou de la couche de stratification du film d'impression (11) ; et
dans lequel la couche intermédiaire du film de scellage (15) est d'une épaisseur plus grande par comparaison avec l'une ou l'autre de la couche de stratification du film de scellage (13) ou de la couche de scellage du film de scellage (17).

10. Stratifié (1) selon l'une quelconque des revendications précédentes, dans lequel le plastomère est un plastomère de polyoléfine.

11. Stratifié (1) selon l'une quelconque des revendications précédentes, la stratification du film d'impression (3) et du film de scellage (5) est par stratification sèche à base de solvant ou stratification sèche à base d'eau.

12. Stratifié (1) selon l'une quelconque des revendications précédentes, ayant au moins 85 % en poids de polyéthylène en poids du stratifié (1).

13. Récipient ayant un thermoscellage par contact direct entre un premier stratifié (1a) et un deuxième stratifié (1b), dans lequel :
(A) le premier stratifié (1a) : comprend un premier film d'impression (3a) et un premier film de scellage (5a), dans lequel :
(a) le premier film d'impression (3a) est un film d'impression soufflé par coextrusion à trois couches ayant :
(i) une première couche superficielle (7a) d'une première formulation de coextrusion ;
(ii) une première couche intermédiaire (9a) en poids de la deuxième formulation de coextrusion ayant :
a. 25 % en poids à 75 % en poids d'un polyéthylène linéaire basse densité de métallocène ;
b. 10 % en poids à 50 % en poids d'un polyéthylène haute densité ;
c. 10 % en poids à 40 % en poids d'un composant polymère polyéthylène facultatif ; et
d. dans lequel le % en poids est par rapport à la deuxième formulation de coextrusion ;
(iii) une première couche de stratification (11a) en poids de la troisième formulation de coextrusion ayant :
a. 10 % en poids à 50 % en poids d'un polyéthylène linéaire basse densité de métallocène ;
b. 25 % en poids à 75 % en poids d'un polyéthylène haute densité ;
c. 10 % en poids à 40 % en poids d'un composant polymère polyéthylène facultatif ;
d. dans lequel le % en poids est par rapport à la troisième formulation de coextrusion ; et
e. dans lequel la première couche intermédiaire du premier film d'impression (9a) est entre la première couche superficielle du premier film d'impression (7a) et la première couche de stratification du premier film d'impression (11a) ; et
(b) le premier film de scellage (5a) est un film d'étanchéité soufflé par coextrusion à trois couches ayant :
(i) une première couche de stratification d'une première formulation de coextrusion (13a) ayant :
a. 50 % en poids à 100 % en poids d'un polyéthylène linéaire multimodal basse densité ;
b. 0 % en poids à 50 % en poids d'un composant polymère polyéthylène facultatif ; et
c. dans lequel le % en poids est par rapport à la première formulation de coextrusion ;
(ii) une première couche intermédiaire d'une deuxième formulation de coextrusion (15a) ayant :
a. 50 % en poids à 100 % en poids d'un polyéthylène linéaire multimodal basse densité ;
b. 0 % en poids à 50 % en poids d'un composant polymère facultatif ; et
c. dans lequel le % en poids est par rapport à la deuxième formulation de coextrusion.
(iii) une première couche de scellage d'une troisième formulation de coextrusion (17a) ayant :
a. 25 % en poids à 60 % en poids d'un plastomère ;
b. 25 % en poids à 75 % en poids d'un polyéthylène linéaire multimodal basse densité ;
c. 0 % en poids à 50 % en poids d'un composant polymère polyéthylène facultatif ;
d. dans lequel le % en poids est par rapport à la troisième formulation de coextrusion ; et
e. dans lequel la première couche intermédiaire du premier film de scellage (15a) est entre la première couche de stratification du premier film de scellage (13a) et la première couche de scellage du premier film de scellage (17a) ; et
(c) dans lequel la première couche de stratification du premier film d'impression (11a) est stratifiée à la première couche de stratification du premier film de scellage (13a) ;
(B) le deuxième stratifié (1b) : comprend un deuxième film d'impression (3b) et un deuxième film de scellage (5b), dans lequel :
(a) le deuxième film d'impression (3b) est un film d'impression soufflé par coextrusion à trois couches ayant :
(i) une deuxième couche superficielle (7b) d'une première formulation de coextrusion ;
(ii) une deuxième couche intermédiaire (9b) en poids de la deuxième formulation de coextrusion ayant :
a. 25 % en poids à 75 % en poids d'un polyéthylène linéaire basse densité de métallocène ;
b. 10 % en poids à 50 % en poids d'un polyéthylène haute densité ;
c. 10 % en poids à 40 % en poids d'un composant polymère polyéthylène facultatif ; et
d. dans lequel le % en poids est par rapport à la deuxième formulation de coextrusion ;
(iii) une deuxième couche de stratification (11b) en poids de la troisième formulation de coextrusion ayant :
a. 10 % en poids à 50 % en poids d'un polyéthylène linéaire basse densité de métallocène ;
b. 25 % en poids à 75 % en poids d'un polyéthylène haute densité ;
c. 10 % en poids à 40 % en poids d'un composant polymère polyéthylène facultatif ;
d. dans lequel le % en poids est par rapport à la troisième formulation de coextrusion ; et
e. dans lequel la deuxième couche intermédiaire du deuxième film d'impression (9b) est entre la deuxième couche superficielle du deuxième film d'impression (7b) et la deuxième couche de stratification du deuxième film d'impression (11b) ; et
(b) le deuxième film de scellage (5b) est un film d'étanchéité soufflé par coextrusion à trois couches ayant :
(i) une deuxième couche de stratification d'une première formulation de coextrusion (13b) ayant :
a. 50 % en poids à 100 % en poids d'un polyéthylène linéaire multimodal basse densité ;
b. 0 % en poids à 50 % en poids d'un composant polymère polyéthylène facultatif ; et
c. dans lequel le % en poids est par rapport à la première formulation de coextrusion ;
(ii) une deuxième couche intermédiaire d'une deuxième formulation de coextrusion (15b) ayant :
a. 50 % en poids à 100 % en poids d'un polyéthylène linéaire multimodal basse densité ;
b. 0 % en poids à 50 % en poids d'un composant polymère facultatif ; et
c. dans lequel le % en poids est par rapport à la deuxième formulation de coextrusion.
(iii) une deuxième couche de scellage d'une troisième formulation de coextrusion (17b) ayant :
a. 25 % en poids à 60 % en poids d'un plastomère ;
b. 25 % en poids à 75 % en poids d'un polyéthylène linéaire multimodal basse densité ;
c. 0 % en poids à 50 % en poids d'un composant polymère polyéthylène facultatif ;
d. dans lequel le % en poids est par rapport à la troisième formulation de coextrusion ; et
e. dans lequel la première couche intermédiaire du premier film de scellage (15a) est entre la deuxième couche de stratification du deuxième film de scellage (13b) et la deuxième couche de scellage du deuxième film de scellage (17b) ; et
(c) dans lequel la deuxième couche de stratification du deuxième film d'impression (11b) est stratifiée à la deuxième couche de stratification du deuxième film de scellage (13b) ; et
(C) dans lequel le scellage direct est entre la première couche de scellage (17a) du premier stratifié (1a) et la deuxième couche de scellage (17a) du deuxième stratifié (1b).

14. Récipient ayant un thermoscellage par contact direct selon la revendication 13, dans lequel le thermoscellage par contact direct est **caractérisé en ce qu'**il a une résistance moyenne de thermoscellage par contact direct selon ASTM F-88M-09 soit : (i) d'au moins 15 N/pouce (590,6 N/m), de préférence d'au moins 23 N/pouce (905,5 N/m), plus préférablement d'au moins 25 N/pouce (984,3 N/m), dans la direction croisée ; soit (ii) d'au moins au moins 20 N/pouce (787,4 N/m), dans la direction machine.

15. Procédé de fabrication d'un récipient comprenant l'étape de formation d'un thermoscellage par contact direct entre deux stratifiés de l'un quelconque décrit dans la revendication 1 à 12 par thermoscellage par contact direct des couches de scellage des stratifiés respectifs à une température allant de 95 °C à 130 °C, pour une pression allant de 1 bar (100 kPa) à 6 bar (600 kPa) de pression, pendant une durée allant de 0,1 seconde à 4 secondes.
